# EUROPEAN PATENT SPECIFICATION

(11) **EP 3 214 039 B1**
(45) Date of publication and mention of the grant of the patent: **07.05.2025**
(21) Application number: 15855017.8
(22) Date of filing: 27.10.2015
(51) Int. Cl.: C01B 3/38, B01J 23/46, H01M 8/0612

(54) **HYDROGEN GENERATION DEVICE, METHOD FOR OPERATING SAME, AND FUEL CELL SYSTEM**
WASSERSTOFFERZEUGUNGSVORRICHTUNG, VERFAHREN ZUM BETRIEB DAVON UND BRENNSTOFFZELLENSYSTEM
DISPOSITIF DE GÉNÉRATION D'HYDROGÈNE, SON PROCÉDÉ DE FONCTIONNEMENT ET SYSTÈME DE PILE À COMBUSTIBLE

(30) Priority: 29.10.2014 JP 2014220128
(43) Date of publication of application: 06.09.2017
(73) Proprietor: Panasonic Intellectual Property Management Co., Ltd., Osaka-shi, Osaka 540-6207 (JP)
(72) Inventor: NARITA, Satoru, Osaka-shi, Osaka 540-6207 (JP); TANAKA, Yoshikazu, Osaka-shi, Osaka 540-6207 (JP); YASUDA, Shigeki, Osaka-shi, Osaka 540-6207 (JP); OGURA, Hiroki, Osaka-shi,Osaka 540-6207 (JP)
(74) Representative: Grünecker Patent- und Rechtsanwälte PartG mbB
(86) International application number: PCT/JP2015/005375
(87) International publication number: WO 2016/067589

(56) References cited:
- WO-A1-2013/132847
- WO-A1-2014/082768
- JP-A- 2002 179 404
- JP-A- 2006 256 928
- JP-A- 2009 179 516
- JP-A- 2012 246 170
- JP-A- 2014 047 083
- JP-A- H07 206 401

## Description

### TECHNICAL FIELD

The present invention relates to a hydrogen generation apparatus that generates hydrogen by reforming a hydrocarbon-containing raw material gas, a method of driving the same, and a fuel cell system including a fuel cell that performs power generation by using a hydrogen-containing gas that is obtained with the hydrogen generation apparatus.

### BACKGROUND ART

A fuel cell that is capable of performing high-efficiency power generation even in a small-sized apparatus is a power generation apparatus that is a distributed energy supply source. A hydrogen gas that is used as fuel during power generation in the fuel cell is not serviced by a typical infrastructure. According to this, in a case of using the fuel cell as a distributed device, for example, a configuration, in which a hydrogen generation apparatus is arranged in combination with the fuel cell, is employed in many cases. The hydrogen generation apparatus subjects a hydrocarbon-containing raw material gas such as a city gas and LPG, which are obtained from an existing fossil raw material infrastructure, to a steam reforming reaction to generate a hydrogen-containing gas.

However, a composition of a gas, which is used as a raw material, may vary in accordance with an infrastructure configuration. For example, even in the city gas, a composition thereof may be different in accordance with a gas distribution company and an area, and the composition may vary with the passage of time.

In Europe and the like, in a case where a gas is supplied through pipelines over countries, a composition of the gas that is supplied may not be uniform and may vary. In addition, in a case of a liquefied gas such as LPG, a composition thereof varies in accordance with a usage rate in a gas cylinder due to a difference in a vapor pressure for each component. In addition, the variation in the raw material gas composition may occur during driving of the hydrogen generation apparatus or the fuel cell system.

As described above, in a case where the composition of the raw material gas that is supplied varies during driving of the apparatus, particularly, in a case where a low heat amount gas is supplied, the amount of hydrogen generation in the hydrogen generation apparatus decreases. In addition, in a case where the hydrogen generation apparatus and the fuel cell are combined, the amount of hydrogen becomes deficient, and thus it is difficult to maintain power generation. In addition, in a case where an unreacted off-gas is returned to a reformer, and is combusted to obtain heat necessary for a reforming reaction, the amount of heat decreases due to deficiency in hydrogen. Accordingly, a temperature of the reformer is lowered, and thus it is difficult to maintain the reaction.

In contrast, in a case where a high heat amount gas is supplied, excessive hydrogen is supplied from the reformer to the fuel cell, and thus efficiency is lowered. In addition, the excessive hydrogen is returned to the reformer and is combusted, and thus the temperature becomes high. Accordingly, it is difficult to maintain the reforming reaction at an appropriate temperature.

As means for solving the above-described problems, there is suggested a method of controlling the driving of a fuel cell power generation apparatus which is capable of performing an appropriate control such as supply of raw fuel, supply of combustion air, and supply of steam without performing composition analysis of the raw fuel at any time even when a composition variation of the raw fuel occurs or dilution of a methane gas concentration occurs. Here, there is suggested a configuration in which a flow rate of the raw fuel is calculated on the basis of a variation in a command value of a reformer temperature adjustor (for example, refer to PTL 1).

In addition, there is suggested a fuel cell system in which even in a case where the amount of heat of a gas per unit volume of the raw material gas supplied to the fuel cell system is small, the amount of hydrogen necessary for power generation is supplied to a fuel cell, and thus it is possible to continue stable power generation. Here, the amount of the raw material supplied is adjusted by controlling a raw material supply device so that a detected temperature in a reforming temperature detector becomes a target temperature that is determined in advance. There is suggested a configuration in which in a case where the detected temperature of the reforming temperature detector becomes lower than the target temperature by a first temperature or higher, the amount of power generation of the fuel cell is lowered (for example, refer to PTL 2).

However, in a case of estimating a raw material gas composition from a temperature variation of a reformer, since the reformer is constituted by a catalyst and a structure body and has a large heat capacity, time is taken for the temperature of the reformer to vary. Accordingly, in a case where a composition variation instantly occurs to an extent that is greater than a value that is assumed, the control cannot keep up with the composition variation. Therefore, there is still room for improvement so as to more quickly detect the composition variation of the raw material gas. WO2014082768A1 relates to a method for operating a fuel cell system, which has a fuel cell stack with at least one fuel cell and a reformer.

### CITATION LIST

### Patent Literature

PTL 1: Japanese Patent Unexamined Publication No. 2004-047438
PTL 2: Japanese Patent Unexamined Publication No. 2014-120313

### SUMMARY OF INVENTION

In consideration of the above-described problems, an object of the invention is to provide a fuel cell system comprising a hydrogen generation apparatus in which the amount of hydrogen generated is appropriately maintained and stable driving is possible, and a method of driving the hydrogen generation apparatus.

According to an aspect of the invention, there is provided a fuel cell system according to claim 1.

According to the above-described configuration, even when a composition of a raw material gas that is supplied varies during driving of the hydrogen generation apparatus, the amount of the hydrogen-containing gas generated varies in accordance with a variation in the composition of the raw material gas, and thus it is possible to instantly detect the variation in the composition of the raw material gas by detecting the variation in the amount of the hydrogen-containing gas generated. In addition, when a control parameter corresponding to the composition of the raw material gas is set on the basis of the resultant detection result, the amount of hydrogen generated is appropriately maintained, and thus it is possible to realize a hydrogen generation apparatus and a fuel cell system which are capable of being stably driven.

When combining the hydrogen generation apparatus of the invention and the fuel cell, it is possible to realize a fuel cell system capable of being stably driven due to maintenance of the amount of hydrogen.

In addition, according to still another aspect of the invention, there is provided a method of driving a hydrogen generation apparatus according to claim 9.

According to the above-described method, even when the composition of the raw material gas that is supplied varies during driving of the hydrogen generation apparatus, the amount of the hydrogen-containing gas generated varies in accordance with a variation in the composition of the raw material gas, and thus it is possible to instantly detect the variation in the composition of the raw material gas by detecting the variation in the amount of the hydrogen-containing gas generated. In addition, when a control parameter corresponding to the composition of the raw material gas is set on the basis of the resultant detection result, the amount of hydrogen generated is appropriately maintained, and thus it is possible to realize a method of driving a hydrogen generation apparatus capable of being stably driven.

### BRIEF DESCRIPTION OF DRAWINGS

FIG. 1 is a view illustrating a schematic configuration of a hydrogen generation apparatus according to a first exemplary embodiment not part of the claimed invention.
FIG. 2 is a view illustrating a variation example of the amount of hydrogen generated when a gas composition is switched **in** the first exemplary embodiment of the invention.
FIG. 3 is a view illustrating a changed image of a control parameter when an external factor is in a predetermined range in the first exemplary embodiment of the invention.
FIG. 4 is a view illustrating a corrected image of the amount of a hydrogen-containing gas generated in the first exemplary embodiment of the invention.
FIG. 5 is a view illustrating a setting example of a control parameter in the first exemplary embodiment of the invention.
FIG. 6 is a view illustrating an example of the relationship between a combustion air ratio and a carbon monoxide discharge concentration **in** the first exemplary embodiment of the invention.
FIG. 7 is a view illustrating a setting example of three or more kinds of control parameters in Modification Example 1 of the hydrogen generation apparatus in the first exemplary embodiment of the invention.
FIG. 8 is a view illustrating a schematic configuration of a hydrogen generation apparatus according to a second exemplary embodiment not part of the claimed invention.
FIG. 9 is a view illustrating comparison of a variation in a flow rate of selective oxidation air, a variation in an output of a selective oxidation air supply device, and a variation in the temperature of a reforming unit when gas species are switched (here, from a high heat amount gas to a low heat amount gas) in a modification example of the second exemplary embodiment of the invention.
FIG. 10 is a view illustrating a schematic configuration of a hydrogen generation apparatus according to a third exemplary embodiment not part of the claimed invention.
FIG. 11 is a view illustrating a schematic configuration of a fuel cell system according to the invention.
FIG. 12 is a view illustrating a corrected image of the amount of a hydrogen-containing gas generated in accordance with a variation in an output of a fuel cell in the invention.
FIG. 13 is a view illustrating a schematic configuration of a fuel cell system in Modification Example 1 of the invention.
FIG. 14 is a view illustrating a schematic configuration of a fuel cell system in Modification Example 2 of the invention.
FIG. 15 is a view illustrating a variation in a flow rate of an off-gas in a case where a power generation output of a fuel cell, that is, a current value and the amount of hydrogen consumed are the same between a case where a gas composed of 100% methane is supplied and a case where a gas composed of 20% nitrogen/80% methane is supplied in Modification Example 2 of the invention.

### DESCRIPTION OF EMBODIMENTS

The present inventors have made a thorough investigation, and as a result, they found the following phenomenon.

In a case where the amount of heat of a raw material gas decreases during driving of a hydrogen generation apparatus, the amount of hydrogen-containing gas generated decreases.

Accordingly, it is possible to detect a variation in a composition of the raw material gas, that is, a decrease in the amount of heat by detecting a decrease in the amount of the hydrogen-containing gas generated. In addition, even in a case of not directly detecting the amount of the hydrogen-containing gas generated, it is possible to instantly detect a variation in a composition by detecting a variation in a pressure (hereinafter, referred to as "pressure loss") of a path, which is caused by the amount of the hydrogen-containing gas generated, without depending on, for example, a variation in the temperature of a reforming unit.

The variation in the pressure loss may be directly measured, for example, by a pressure meter, or may be indirectly measured, for example, on the basis of a variation in a flow rate which is based on the variation in the pressure loss of the path.

In addition, for example, in a case of a combination with a fuel cell, when the amount of power generation in the fuel cell is the same in each case, the amount of hydrogen consumed in the fuel cell is the same in each case, and thus a flow rate of a fuel cell off-gas decreases.

Accordingly, it is possible to detect a variation in the composition by detecting the decrease in the amount of the hydrogen-containing gas generated and the amount of the fuel cell off-gas. Similarly, in a case where the amount of heat of the raw material gas increases, it is possible to detect a variation in the composition of the raw material gas, that is, an increase in the amount of heat by detecting an increase in the amount of the hydrogen-containing gas generated, and an increase in the amount of the fuel cell off-gas generated.

Hereinafter, exemplary embodiments of the invention will be described with reference to the accompanying drawings. Furthermore, the invention is not limited to the exemplary embodiments.

### (First Exemplary Embodiment)

First, description will be given of a first exemplary embodiment of the invention.

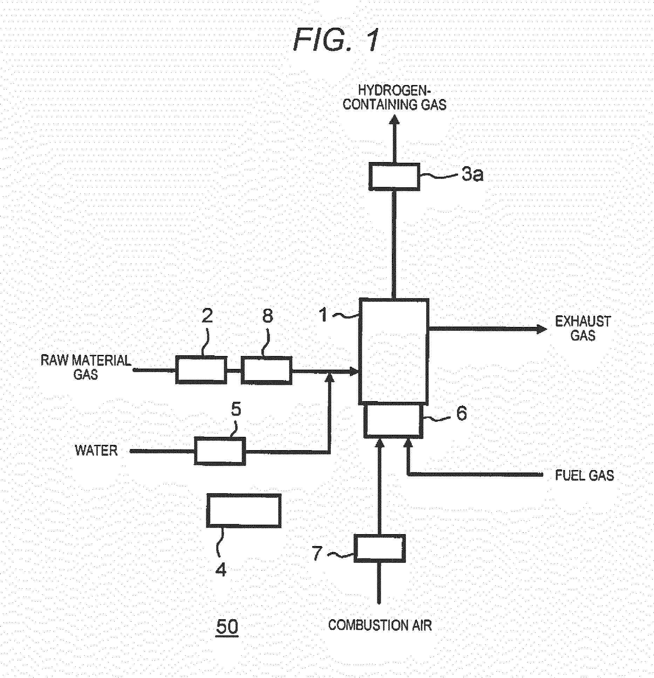

FIG. 1 is a view illustrating a schematic configuration of hydrogen generation apparatus 50 according to the first exemplary embodiment not part of the claimed invention.

In this exemplary embodiment, hydrogen generation apparatus 50 includes reforming unit 1 that reforms a hydrocarbon-containing raw material gas to generate a hydrogen-containing gas, raw material supply device 2 that supplies the raw material to reforming unit 1, hydrogen-containing gas flow meter 3a as a hydrogen generation amount detection unit that detects the amount of the hydrogen-containing gas generated, and controller 4.

In this exemplary embodiment, controller 4 is configured to drive respective constituent elements, which include at least raw material supply device 2, of hydrogen generation apparatus 50 by setting a control parameter corresponding to a relatively low heat amount gas in a case where the amount of the hydrogen-containing gas generated decreases, and by setting a control parameter corresponding to a relatively high heat amount gas in a case where the amount of the hydrogen-containing gas generated increases.

In this exemplary embodiment, as a method of generating hydrogen, a steam reforming reaction, which reforms hydrocarbon and steam, is used, and an Ru-based catalyst is used as a reforming catalyst that fills reforming unit 1. In a case of using the steam reforming reaction, water may be supplied to reforming unit 1 by water supply device 5. In addition, in this exemplary embodiment, the steam reforming reaction is exemplified as the reforming reaction. However, the same effect is also obtained with other reactions such as an autothermal reaction and a partial oxidation reforming reaction.

Reforming unit 1 may have a structure that is heated by heat transfer from combustor 6, or an outer side of reforming unit 1 may be covered with a heat insulating material. In combustor 6, a raw material gas or a hydrogen-containing gas may be combusted. In addition, combustion air may be supplied to combustor 6 by combustion air supply device 7.

In this exemplary embodiment, in a path of the hydrogen-containing gas, hydrogen-containing gas flow meter 3a for the hydrogen-containing gas is provided as a hydrogen generation amount detection unit. Hydrogen-containing gas flow meter 3a is designed on the assumption of a predetermined composition of the hydrogen-containing gas, and is configured to output a signal of the flow rate and detect the amount of the hydrogen-containing gas generated from the output signal.

Next, description will be given of the operation of hydrogen generation apparatus 50 according to the first exemplary embodiment. In addition, all of the following operations are performed by controlling respective devices of hydrogen generation apparatus 50 by controller 4. In this exemplary embodiment, as a raw material gas, a control parameter corresponding to a gas composed of 100% methane is used.

Controller 4 of the hydrogen generation apparatus controls raw material supply device 2 to supply the raw material gas to reforming unit 1. Here, a buster pump that raises a pressure of the raw material gas is used as raw material supply device 2, and a flow meter for the raw material gas is used as raw material flow rate detector 8. In addition, controller 4 is configured to control raw material supply device 2 in order for the flow rate of the raw material gas to be a predetermined flow rate.

Furthermore, the raw material gas may be supplied in a state in which a sulfur component in the raw material gas is desulfurized after passing through a desulfurizer. In addition, the flow rate of the raw material gas may be set on the basis of a flow rate of a hydrogen-containing gas or a hydrogen gas to be generated in consideration of the composition of the raw material gas. Here, the flow rate is set to 3.0 NL/min.

In addition, controller 4 controls water supply device 5 to supply stream (hereinafter, referred to as "reforming water"), which is necessary for the steam reforming reaction, to reforming unit 1. In this exemplary embodiment, the reforming water is supplied after a flow rate of the reforming water is adjusted so that S/C representing a ratio of water to a carbon number in the raw material gas supplied to reforming unit 1 becomes 2.9.

Here, a parameter corresponding to a gas composed of 100% methane is used as the raw material gas, and thus a ratio of the carbon number in one mole of raw material gas is 1.0, and water is supplied in such a manner that the amount of water supplied becomes 2.9×1.0×18×3.0÷22.4=7.0 cc/min. The raw material gas and the reforming water, which are supplied to reforming unit 1, are reformed to a hydrogen-containing gas through the steam reforming reaction under the presence of the reforming catalyst inside reforming unit 1.

In addition, controller 4 controls combustion air supply device 7 to supply combustion air necessary for combustion of the raw material gas or the hydrogen-containing gas which is supplied to combustor 6. Here, controller 4 controls a flow rate of the combustion air so that an air ratio, which represents a ratio of a flow rate of supply air to a theoretical flow rate of the combustion air when the composition of the raw material gas is set to 100% methane, becomes 1.7.

As described above, so as to efficiently and stably generate the appropriate hydrogen, control parameters such as the flow rate of the raw material gas, the amount of water supplied, and the flow rate of the combustion air may be set in consideration of the composition of the raw material gas. In this case, controller 4 is configured to appropriately set a control parameter of at least one of water supply device 5 and combustion air supply device 7.

Specifically, controller 3 may be configured to drive water supply device 5 by setting a control parameter corresponding to a relatively low heat amount gas in a case where the amount of the hydrogen-containing gas generated decreases, and may be configured to drive water supply device 5 by setting a control parameter corresponding to a relatively high heat amount gas in a case where the amount of the hydrogen-containing gas generated increases.

In addition, controller 4 may be configured to drive combustion air supply device 7 by setting a control parameter corresponding to the relatively low heat amount gas in a case where the amount of the hydrogen-containing gas generated decreases, and may be configured to drive combustion air supply device 7 by setting a control parameter corresponding to the relatively high heat amount gas in a case where the amount of the hydrogen-containing gas generated increases.

Next, description will be given of a characteristic operation of hydrogen generation apparatus 50 according to the first exemplary embodiment.

### (Method of Detecting Amount of Hydrogen Generated)

First, description will be given of a method of detecting the amount of hydrogen-containing gas generated in this exemplary embodiment.

It is assumed that a control parameter corresponding to a gas composed of 100% methane is used as the raw material gas that is supplied, a gas composed of 100% methane is actually supplied, and thus hydrogen generation apparatus 50 can be stably driven. Here, in a case where the amount of the hydrogen-containing gas generated, which is detected by hydrogen-containing gas flow meter 3a that is the hydrogen generation amount detection unit, decreases, a control parameter corresponding to the relatively low heat amount gas is set, and driving is performed.

In addition, it is assumed that the composition of the raw material gas is switched from 100% methane to a gas composed of, for example, 20% nitrogen/80% methane. The methane gas, which contains 20% nitrogen, is a relatively low heat amount gas in comparison to the case of 100% methane.

When the gas composition is switched, a temperature of reforming unit 1 does not rapidly vary due to heat capacity thereof, and thus it can be considered that a conversion ratio of hydrocarbon is the same before and after conversion of gas species. That is, when the flow rate of the raw material gas and the conversion ratio are the same in each case, the amount of hydrogen generated decreases.

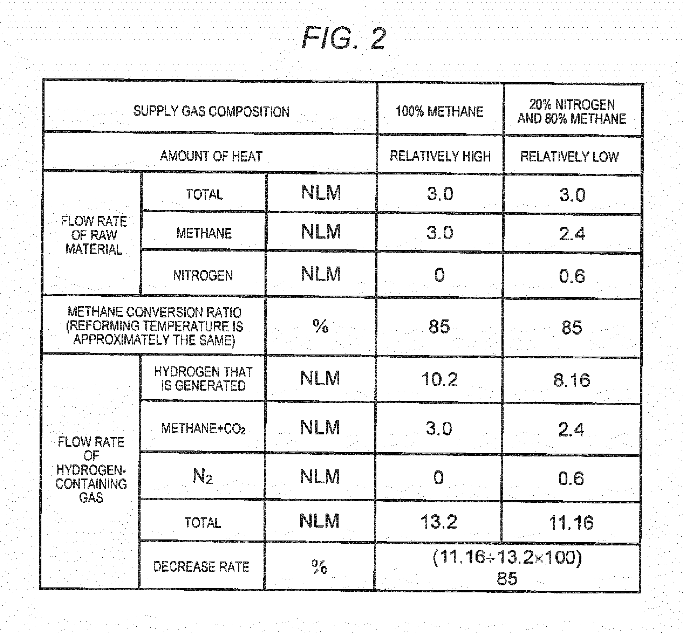

FIG. 2 is a view illustrating a variation example of the amount of hydrogen generated when a gas composition is switched in the first exemplary embodiment of the invention.

When the gas composition is switched to a low heat amount gas, the flow rate of the hydrogen-containing gas decreases to approximately 85%.

The gas composed of 20% nitrogen/80% methane, which is the relatively low heat amount gas, contains a large amount of inert gas in comparison to a gas composed of 100% methane which is the relatively high heat amount gas. In a case where the inert gas is contained in the raw material, a flow rate of the raw material, which does not contribute to hydrogen generation, increases in the flow rate of the raw material gas, and thus it is possible to detect a variation in the amount of the hydrogen-containing gas generated in a more remarkable manner.

Furthermore, in this exemplary embodiment, hydrogen-containing gas flow meter 3a is used as the hydrogen generation amount detection unit. However, as a method of determining whether or not a generation amount decreases, a method capable of detecting a variation in the composition in a more reliable manner may be appropriately selected, for example, in consideration of a case where the amount of hydrogen-containing gas generated decreases by a predetermined value in a predetermined time or a case where the amount of the hydrogen-containing gas generated decreases to a predetermined flow rate threshold value in a predetermined time, a variation amount under typical driving conditions, and a behavior when a gas composition varies.

In contrast, with regard to a method of determining whether or not the generation amount increases, for example, it can be determined that the generation amount increases in a case where the amount of the hydrogen-containing gas generated increases by a predetermined value in a predetermined time, or in a case where the amount of the hydrogen-containing gas generated increases to a predetermined flow rate threshold value in a predetermined time. In addition, the values may be compared with each other after obtaining an average value for the predetermined time. Here, in a case where an average value of the amount of the hydrogen-containing gas generated for 10 seconds varies by 5% or greater in comparison to an average value before one minute, it is assumed that the generation amount increases.

In addition, the amount of the hydrogen-containing gas generated may also vary due to not only the composition of the raw material gas but also various external factors such as an ambient environment temperature, a pressure of the raw material gas, and a variation with the passage of the driving time. Accordingly, when a parameter, which contributes to the amount of the hydrogen-containing gas generated, is in a predetermined range, the setting may be changed. In addition, when a variation amount of the parameter, which contributes to the amount of the hydrogen-containing gas generated, per predetermined time is in a predetermined range, the setting may be changed.

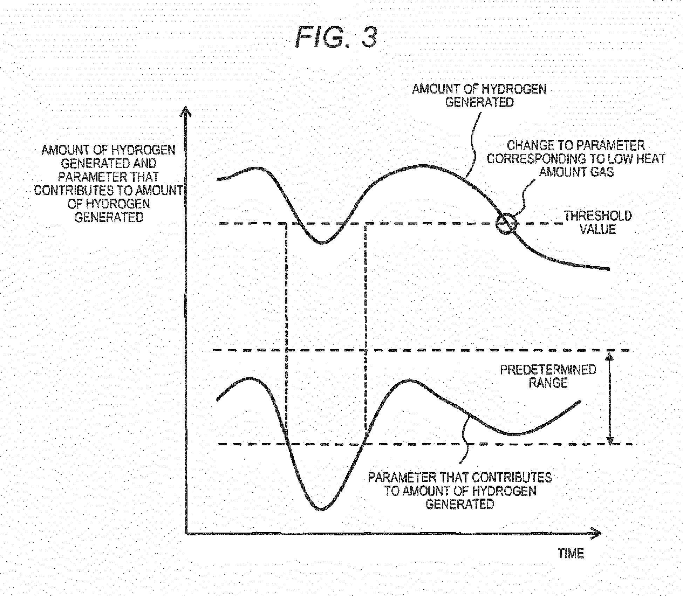

FIG. 3 is a view illustrating a changed image of a control parameter when an external factor is in a predetermined range in the first exemplary embodiment of the invention.

For example, it is assumed that an environment temperature is exemplified as a parameter that contributes to the amount of the hydrogen-containing gas generated. At this time, when the temperature is in a predetermined temperature range or a variation amount of the temperature is in a predetermined range, in a case where the amount of the hydrogen-containing gas generated, which is detected by the hydrogen generation amount detection unit, decreases and reaches a threshold value, controller 4 performs driving by setting a control parameter corresponding to the relatively low heat amount gas. In addition, at this time, in a case where the amount of the hydrogen-containing gas generated increases, controller 4 performs driving by setting a control parameter corresponding to the relatively high heat amount gas.

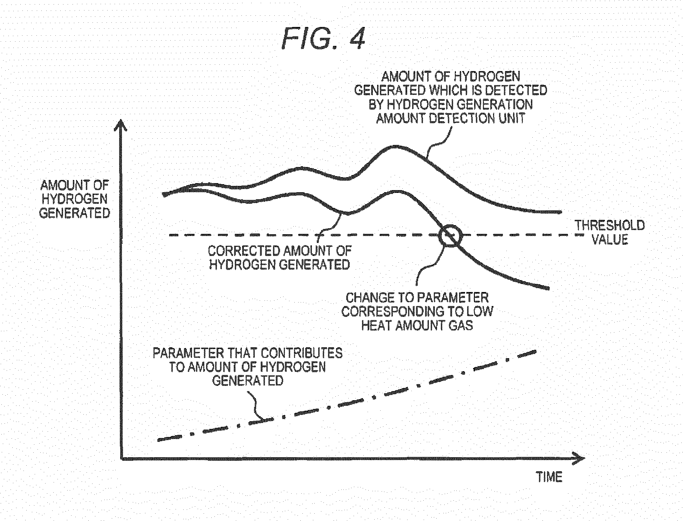

FIG. 4 is a view illustrating a corrected image of the amount of the hydrogen-containing gas generated in the first exemplary embodiment of the invention.

The above-described external factor may vary continuously. For example, in a case where the environment temperature continuously rises under a predetermined condition, a conversion ratio in reforming unit 1 may be raised, and thus the amount of hydrogen generated may increase. Accordingly, after correcting the amount of hydrogen generated which varies due to the external factor, whether or not a variation occurs in the amount of the hydrogen-containing gas generated, which is detected by the hydrogen generation amount detection unit, may be determined. In addition, even when correcting a threshold value for changing of the control parameter, the same effect can be obtained.

According to this configuration, even when the composition of the raw material gas that is supplied varies during driving of the hydrogen generation apparatus, it is possible to instantly detect a variation in the composition of the raw material gas by detecting a variation in the amount of the hydrogen-containing gas generated, for example, without waiting for a variation in a reforming temperature and the like.

### (Method of Setting Control Parameter)

Next, description will be given of a method of setting the control parameter of hydrogen generation apparatus 50 in this exemplary embodiment.

Controller 4 performs driving by setting a control parameter corresponding to the relatively low heat amount gas in a case where the amount of the hydrogen-containing gas generated decreases, and performs driving by setting a control parameter corresponding to the relatively high heat amount gas in a case where the amount of the hydrogen-containing gas generated increases.

As the control parameter, for example, a control parameter such as the amount of the raw material gas supplied, the amount of water supplied (or S/C), and the flow rate of the combustion air (or a combustion air ratio), which are caused by the composition of the raw material gas, may be set.

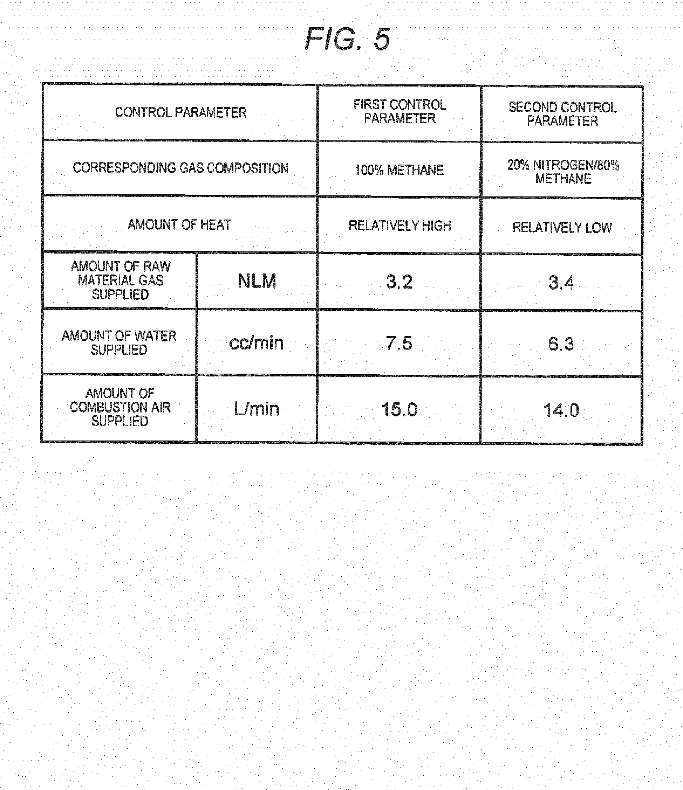

FIG. 5 is a view illustrating a setting example of a control parameter in the first exemplary embodiment of the invention.

Here, a case of 100% methane is assumed as a raw material composition of the control parameter corresponding to the relatively high heat amount gas, and a case of 20% nitrogen/80% methane is assumed as a raw material composition of the control parameter corresponding to the relatively low heat amount gas.

Here, description will be given of the amount of the raw material gas supplied which is an example of the control parameter.

The amount of the raw material gas supplied is directly correlated with the amount of hydrogen that is generated. Here, the lower the amount of heat of the raw material gas supplied is, the further the proportion of hydrogen in the raw material gas decreases, and thus the amount of hydrogen gas that can be generated decreases.

That is, the setting may be performed in such a manner that the lower the amount of heat of the raw material gas supplied is, the further the amount of the raw material gas supplied increases. More specifically, in a case where the amount of the hydrogen-containing gas generated, which is detected by the hydrogen generation amount detection unit, decreases, driving may be performed by relatively increasing the flow rate of the raw material gas, and in a case where the amount of the hydrogen-containing gas generated increases, driving may be performed by relatively decreasing the flow rate of the raw material gas.

Next, description will be given of the amount of water supplied which is an example of the control parameter.

When the value of S/C is excessively small, carbon may precipitate, or when the value of S/C is excessively large, excessive energy is necessary for generation of steam and a reaction, that is, efficiency may decrease. Therefore, it is important to appropriately maintain the value of S/C.

Here, in a case where 100% methane is assumed as the raw material composition, the number of moles of a carbon number in one mole of raw material gas is 1.0. On the other hand, in a case of 20% nitrogen/80% methane, the number of moles of the carbon number in one mole of raw material gas becomes 0.8. That is, in a case of the same flow rate of the raw material gas and the same amount of water supplied, the value of S/C becomes 1.25 times.

Accordingly, so as to maintain S/C to a predetermined value, the setting may be performed in such a manner that the lower the amount of heat of the raw material gas supplied is, the further the amount of water supplied decreases. In addition, the setting may be performed in consideration of the composition and the flow rate of the raw material gas so as to constantly maintain S/C.

Next, description will be given of the amount of combustion air supplied which is an example of the control parameter.

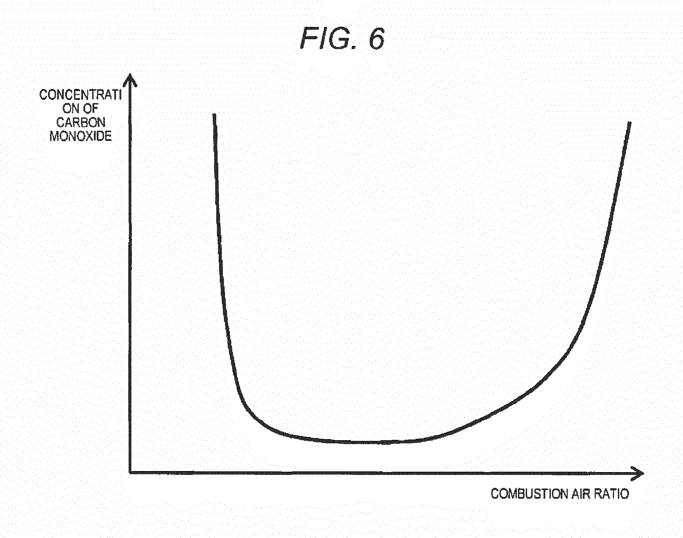

FIG. 6 is a view illustrating an example of the relationship between a combustion air ratio and a carbon monoxide discharge concentration in the first exemplary embodiment of the invention.

When a combustion air ratio becomes excessively small, a concentration of carbon monoxide in an exhaust gas increases due to incomplete combustion. In addition, when the combustion air ratio becomes excessively large, it is difficult to maintain the appropriate combustion, and thus the concentration of carbon monoxide increases. Accordingly, it is necessary to maintain the combustion air ratio to an appropriate value.

In a case where the raw material composition is 100% methane that is the relatively high heat amount gas, a flow rate of a gas to be combusted is greater in comparison to a case of 20% nitrogen/80% methane which is the relatively low heat amount gas. When the composition varies, if the amount of the raw material supplied, and the amount of the combustion air that is supplied are made to be the same in each case, the combustion air ratio, that is, a ratio of the flow rate of the supply air to the flow rate of the combustion air which is necessary for complete combustion relatively increases, and thus it is difficult to maintain the appropriate combustion due to occurrence of carbon monoxide, and the like.

Accordingly, so as to maintain the combustion air ratio to a predetermined value, the setting may be performed in such a manner that the lower the amount of heat of the raw material gas supplied is, the further the flow rate of the combustion air decreases. In addition, the setting may be performed in consideration of the composition and the flow rate of the raw material gas so as to constantly maintain the combustion air ratio.

Furthermore, a control parameter, which is caused by the raw material gas composition, may be appropriately set so as to efficiently and stably drive the hydrogen generation apparatus without limitation to the flow rate of the raw material, the amount of water supplied, and the flow rate of the combustion air. A control parameter including at least any one among the parameters may be set. In addition, when the control parameters are changed in a composite manner, more stable driving is possible, and thus a more significant effect is obtained.

According to this configuration, in a case where the amount of the hydrogen-containing gas generated decreases, driving can be performed by setting a control parameter corresponding to the relatively low heat amount gas, and in a case where the amount of the hydrogen-containing gas generated increases, driving can be performed by setting a control parameter corresponding to the relatively high heat amount gas. When setting the control parameter corresponding to the amount of heat of the raw material gas, that is, the composition thereof, the amount of the hydrogen generated is appropriately maintained, and thus it is possible to realize the hydrogen generation apparatus capable of being stably driven in an efficient manner.

### (Modification Example 1)

Next, description will be given of Modification Example 1 of hydrogen generation apparatus 50 according to the first exemplary embodiment.

In the description with respect to the characteristic operation in Modification Example 1, a difference from the first exemplary embodiment will be mainly described, and the other configurations are set to be the same as in the first exemplary embodiment.

In this modification example, three kinds of control parameters, in which a corresponding amount of heat is different, are provided as the raw material gas. A gas composed of 20% propane/80% methane is set as a composition of the relatively high heat amount raw material gas, a gas composed of 100% methane is set as a relatively intermediate heat amount gas, and a case of 20% nitrogen/80% methane is set as a relatively low heat amount gas.

Next, description will be given of a characteristic operation of hydrogen generation apparatus 50 in Modification Example 1.

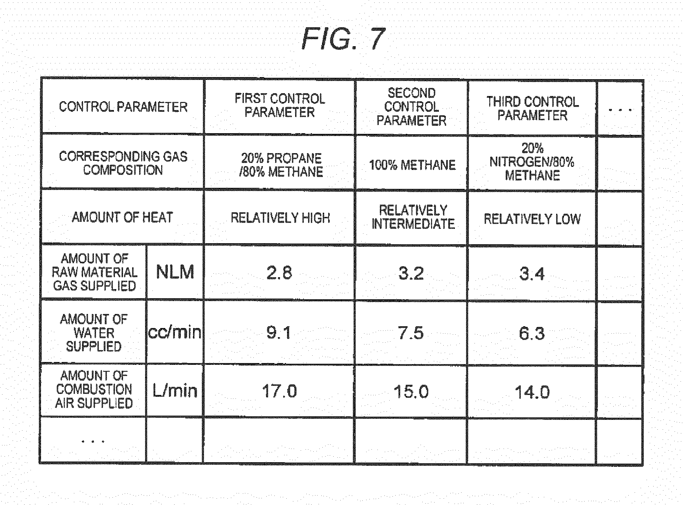

FIG. 7 is a view illustrating a setting example of three or more kinds of control parameters in Modification Example 1 of hydrogen generation apparatus 50 in the first exemplary embodiment.

Here, it is assumed that a control parameter corresponding to a gas composed of 100% methane, which is a relatively intermediate heat amount gas, is used as the raw material gas that is supplied, a gas composed of 100% methane is actually supplied, and thus hydrogen generation apparatus 50 can be stably driven. Here, in a case where the amount of the hydrogen-containing gas generated, which is detected by hydrogen-containing gas flow meter 3a that is the hydrogen generation amount detection unit, decreases, controller 4 performs driving by setting a control parameter corresponding to the relatively low heat amount gas.

In addition, it is assumed that the composition of the raw material gas is switched from 100% methane to a gas composed of, for example, 20% nitrogen/80% methane. The methane gas, which contains 20% nitrogen, is a relatively low heat amount gas in comparison to the case of 100% methane. When the gas composition is switched, a temperature of reforming unit 1 does not rapidly vary due to heat capacity thereof, and thus it can be considered that a conversion ratio of hydrocarbon is the same before and after conversion of gas species. That is, when the flow rate of the raw material gas and the conversion ratio are the same in each case, the amount of hydrogen generated decreases.

In contrast, it is assumed that the composition of the raw material gas is switched from 100% methane to a gas composed of, for example, 20% propane/80% methane. The methane gas, which contains 20% propane, is a relatively high heat amount gas in comparison to 100% methane. In propane, the number of hydrogen atoms in one molecule is great, and thus when the flow rate of the raw material and the conversion ratio are the same in each case, the amount of hydrogen generated increases.

Here, as is the case with the first exemplary embodiment, hydrogen-containing gas flow meter 3a is used as a unit that detects the amount of hydrogen generated, and detection is performed by the same method as in the first exemplary embodiment.

### (Method of Setting Control Parameter)

Next, description will be given of a method of setting a control parameter of hydrogen generation apparatus 50 in Modification Example 1.

In a case where driving is performed with a control parameter corresponding to a gas composed of 100% methane as the raw material gas, when the amount of the hydrogen-containing gas generated decreases, controller 4 performs driving by setting a control parameter (here, 20% nitrogen/80% methane) corresponding to the relatively low heat amount gas, and when the amount of the hydrogen-containing gas generated increases, controller 4 performs driving by setting a control parameter (here, 20% propane/80% methane) corresponding to the relatively high heat amount gas.

Furthermore, the control parameter to be selected may be selected in accordance with the degree of a variation in the flow rate of the hydrogen-containing gas which is detected by the hydrogen generation amount detection unit.

For example, in a case where driving is performed with a control parameter corresponding to a gas composed of 20% propane/80% methane, when the amount of the hydrogen-containing gas generated decreases by a predetermined amount (here, in a case where the amount of the hydrogen-containing gas generated decreases by 5% or greater), controller 4 performs driving by setting a control parameter (here, 100% methane) corresponding to an intermediate amount of heat as a relatively low amount of heat, among the three control parameters.

In addition, in a case where driving is performed with a control parameter corresponding to a gas composed of 20% propane/80% methane, when the amount of the hydrogen-containing gas generated decreases by a predetermined amount greater than the above-described predetermined amount (here, in a case where the amount of the hydrogen-containing gas generated decreases by 10% or greater), controller 4 performs driving by setting a control parameter (here, 20% nitrogen/80% methane) corresponding to the relatively lowest amount of heat among the three parameters.

Furthermore, in Modification Example 1, it is assumed that the three kinds of control parameters are provided, but a plurality of (three or more kinds of) control parameters may be provided, and these parameters may be set to be appropriately selected.

According to this configuration, when driving is performed by selecting an appropriate control parameter from the plurality of control parameters after detecting a variation in the amount of hydrogen generated, the amount of hydrogen generated is appropriately maintained, and thus it is possible to realize a hydrogen generation apparatus capable of being stably driven in an efficient manner.

### (Modification Example 2)

Next, description will be given of Modification Example 2 of hydrogen generation apparatus 50 according to the first exemplary embodiment.

In the description with respect to a characteristic operation in Modification Example 2, a difference from the first exemplary embodiment will be mainly described, and the other configurations are set to be the same as in the first exemplary embodiment.

In this modification example, as a method of setting the control parameter, a configuration, in which the control parameter is applied by the function on the composition of the raw material gas, that is, the amount of heat, is employed. As described above, the setting may be performed in such a manner that as the amount of heat of a raw material gas is relatively lower, for example, the flow rate of the raw material gas is set to be greater, the amount of water supplied is set to be smaller, and the flow rate of the combustion air is set to be smaller.

The control parameter is applied as a function with respect to the amount of heat of the raw material gas which is calculated from the flow rate, which is detected by the hydrogen generation amount detection unit, of the hydrogen-containing gas.

As illustrated in FIG. 2, in a case of switching from a gas composed of 100% methane to a gas composed of 20% nitrogen/80% methane, when the flow rate of the raw material is the same as 3.0 NLM, the flow rate of the hydrogen-containing gas decreases by 15%, and the amount of hydrogen generated decreases from 10.2 NLM to 8.16 NLM by 20% (decreases to 80%).

Accordingly, when it is detected that the flow rate of the hydrogen-containing gas decreases by 15%, the raw material gas may be increased by 25% (100÷80-1)×100) so as to maintain the amount of hydrogen generated to be equal to that before a variation in the gas composition.

In Modification Example 2, when a decrease rate of the hydrogen-containing gas is set as X, the flow rate of the raw material before the variation of the composition is set as Y0, and a flow rate of the raw material, which is newly set after the variation in the composition, is set as Y, an expression of Y=(1+1.67X)×Y0 can be set. The numerical value of 1.67 is calculated from an increment of 25% and a decrement of 15%, that is, 25÷15.

That is, when the flow rate of the hydrogen-containing gas decreases by 15%, as a setting of the new raw material gas Y, an expression of (1+1.67×0.15)=1.25×Y0 can be set. A decrease rate can be set as a flow rate of the hydrogen-containing gas which decreases for a predetermined time. Here, the decrease rate is defined as a decrease rate for one minute. In addition, this is also true of a case where the flow rate of the hydrogen-containing gas increases.

In addition, for example, other control parameters such as the amount of water supplied and the flow rate of the combustion air, which are caused by the composition of the raw material gas, may be appropriately set by a function.

According to this configuration, in a case where the amount of the hydrogen-containing gas generated varies, when a control parameter, which continuously corresponds to the optimal amount of heat of the raw material gas, that is, the composition thereof, is set, the amount of hydrogen generated is appropriately maintained, and thus it is possible to realize a hydrogen generation apparatus capable of being stably driven in an efficient manner.

### (Second Embodiment)

Next, description will be given of hydrogen generation apparatus 60 according to a second exemplary embodiment not part of the claimed invention.

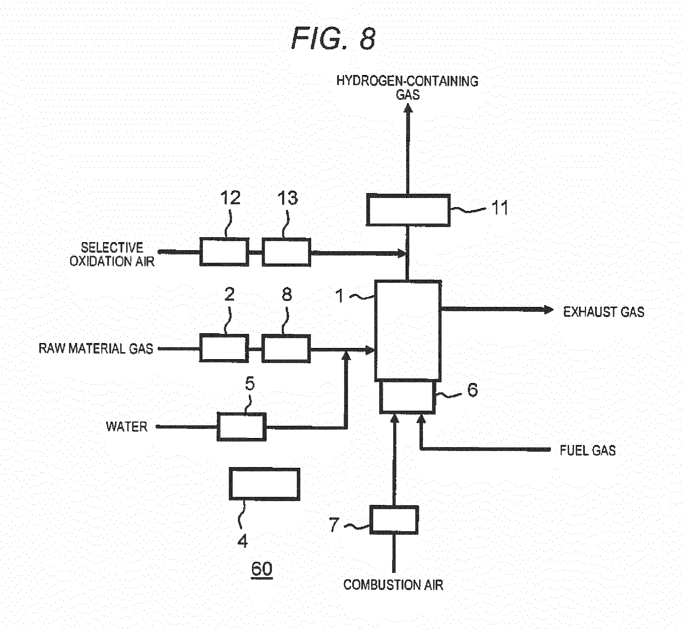

FIG. 8 is a view illustrating a schematic configuration of hydrogen generation apparatus 60 according to the second exemplary embodiment.

The same reference numerals will be given to portions which are the same as or correspond to those in the first exemplary embodiment illustrated in FIG. 1, and detailed description thereof will be omitted.

This exemplary embodiment relates to a configuration including selective oxidation unit 11 that selectively oxides and removes carbon monoxide contained in a hydrogen-containing gas by using oxygen, selective oxidation air supply device 12 that supplies selective oxidation air to selective oxidation unit 11, and selective oxidation air flow rate detector 13 that detects a flow rate of the selective oxidation air.

Selective oxidation unit 11 has a configuration in which a predetermined temperature (here, approximately 160°C) is maintained by using an Ru-based catalyst, and oxygen-containing air is supplied from selective oxidation air supply device 12 to selectively remove carbon monoxide contained in the hydrogen-containing gas.

In addition, the hydrogen-containing gas, which is obtained in reforming unit 1 and contains carbon monoxide, may be supplied to selective oxidation unit 11 after reducing carbon monoxide step by step through a converting catalyst. In addition, the following configuration is employed. Specifically, air is pumped by using an air pump as selective oxidation air supply device 12, and the amount of supply is measured by using a flow meter as selective oxidation air flow rate detector 13. In addition, in this exemplary embodiment, air is supplied so that a flow rate of the selective oxidation air becomes 0.7 NLM.

Next, description will be given of a characteristic operation in this exemplary embodiment. Here, a difference from the first exemplary embodiment will be described, and the other configurations are set to be the same as in the first exemplary embodiment.

In this exemplary embodiment, selective oxidation air flow rate detector 13 that detects the flow rate of the selective oxidation air is used as the hydrogen generation amount detection unit. During driving of hydrogen generation apparatus 60, controller 4 is configured to perform driving by setting a control parameter corresponding to the relatively low heat amount gas in a case where the flow rate of the selective oxidation air increases, and is configured to perform driving by setting a control parameter corresponding to the relatively high heat amount gas in a case where the flow rate of the selective oxidation air decreases.

Specifically, when hydrogen generation apparatus 60 is driven with a control parameter for a high heat amount gas, in a case where the flow rate of the selective oxidation air increases to a first flow rate (here, 0.8 NLM) or greater, or in a case where the flow rate of the selective oxidation air increases by a second flow rate (here, 0.1 NLM/one minute) or greater in a predetermined time determined in advance, controller 4 drives hydrogen generation apparatus 60 after switching to the control parameter for a low heat amount gas.

In addition, when hydrogen generation apparatus 60 is driven with the control parameter for the low heat amount gas, in a case where the flow rate of the selective oxidation air decreases to a third flow rate (here, 0.6 NLM) or less, or in a case where the flow rate of the selective oxidation air decreases by a fourth flow rate (here, 0.1 NLM/one minute) or greater in a predetermined time determined in advance, controller 4 is configured to drive hydrogen generation apparatus 60 after switching to the control parameter for the high heat amount gas.

Here, the selective oxidation air is supplied to selective oxidation unit 11, and is supplied or discharged through a path of the hydrogen-containing gas after reaction. When the amount of the hydrogen-containing gas generated decreases, the amount of a fluid, which passes through the same path, decreases. According to this, a pressure loss of the path decreases.

Under the same conditions as in the first exemplary embodiment, the flow rate decreases to approximately 85%. However, typically, the pressure loss of the fluid that flows through a pipeline and the like is proportional to a square of a flow speed. That is, if the cross-sectional area of a flow path is the same, the pressure loss decreases to 0.85×0.85, that is, approximately 72%.

Here, in a case where selective oxidation air supply device 12 is controlled so that a predetermined flow rate of selective oxidation air flow is supplied, if the pressure loss of the path decreases, a selective oxidation flow rate increases. In contrast, if the pressure loss of the path increases in accordance with an increase in the amount of the hydrogen-containing gas generated, the selective oxidation flow rate decreases. Accordingly, it is possible to detect a variation in the amount of the hydrogen-containing gas generated, that is, a variation in the composition of the raw material gas by detecting the variation in the selective oxidation flow rate.

Furthermore, the same method as in the first exemplary embodiment can be used for the setting of the control parameter.

According to this configuration, even when the composition of the raw material gas that is supplied varies during driving of hydrogen generation apparatus 60, it is possible to instantly detect a variation in the composition of the raw material gas by detecting a variation in the flow rate of the selective oxidation air in accordance with a variation in the pressure of the path which is caused by the variation in the amount of the hydrogen-containing gas generated. In addition, in hydrogen generation apparatus 60, it is possible to determine the composition of the raw material gas by using a typical selective oxidation flow rate, and thus it is possible to realize a simple apparatus at a low cost.

### (Modification Example)

Next, description will be given of a modification example of hydrogen generation apparatus 60 according to the second exemplary embodiment.

The same reference numerals will be given to portions which are the same as or correspond to those in the second exemplary embodiment illustrated in FIG. 8, and detailed description thereof will be omitted. In this modification example, selective oxidation air supply device 12, which supplies selective oxidation air to selective oxidation unit 11, is used as the hydrogen generation amount detection unit. In this exemplary embodiment, air is supplied so that the flow rate of the selective oxidation air becomes 0.7 NLM, and an output of selective oxidation air supply device 12 at this time is 50%.

Next, in description with respect to a characteristic operation in this modification embodiment, a difference from the second exemplary embodiment will be described, and the other configurations are set to be the same as in the second exemplary embodiment.

When hydrogen generation apparatus 60 is driven, and selective oxidation air supply device 12 is controlled so that the flow rate of the selective oxidation air becomes a predetermined flow rate, controller 4 is configured to perform driving by setting a control parameter corresponding to the relatively low heat amount gas in a case where the output of selective oxidation air supply device 12 decreases, and is configured to perform driving by setting a control parameter corresponding to the relatively high heat amount gas in a case where the output of selective oxidation air supply device 12 increases.

Specifically, when hydrogen generation apparatus 60 is driven with a control parameter for a high heat amount gas, in a case where the output of selective oxidation air supply device 12 decreases to a first output (here, 40%) or less, or in a case where the output of selective oxidation air supply device 12 decreases by a second output (here, 10%/one minute) or greater in a predetermined time determined in advance, controller 4 drives hydrogen generation apparatus 60 after switching to a control parameter for a low heat amount gas.

In addition, when hydrogen generation apparatus 60 is driven with the control parameter for the low heat amount gas, in a case where the output of selective oxidation air supply device 12 increases to a third output (here, 60%) or greater, or in a case where the output of selective oxidation air supply device 12 increases by a fourth output (here, 10%/one minute) or greater in a predetermined time determined in advance, controller 4 is configured to drive hydrogen generation apparatus 60 after switching to the control parameter for the high heat amount gas.

In addition, the variation in the flow rate of the selective oxidation air, and the variation in the output of selective oxidation air supply device 12 may be simultaneously detected.

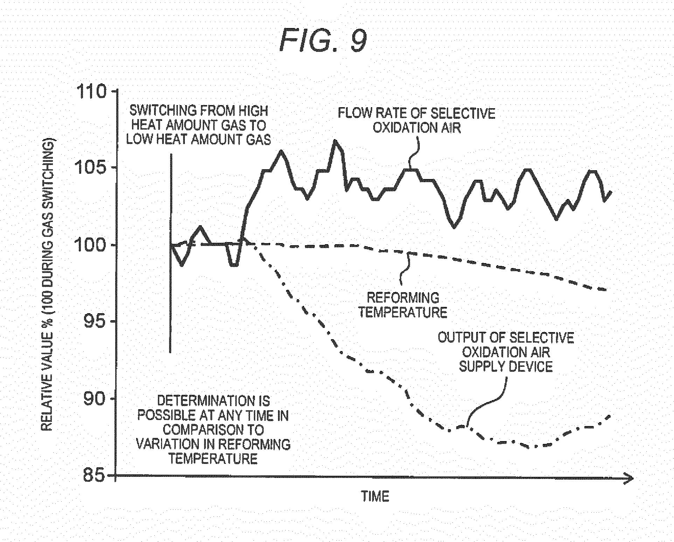

FIG. 9 is a view illustrating comparison of a variation in a flow rate of the selective oxidation air, a variation in an output of the selective oxidation air supply device 12, and a variation in the temperature of a reforming unit 1 when gas species are switched (here, from a high heat amount gas to a low heat amount gas) in the modification example of the second exemplary embodiment.

When the gas species are switched, it is possible to instantly detect the variation in the flow rate of the selective oxidation air or the output of selective oxidation air supply device 12 in comparison to the variation in the temperature of reforming unit 1 having large heat capacity. According to this, control in accordance with the switching of the gas species is performed, and thus stable driving is possible.

According to this configuration, even when the composition of the raw material gas that is supplied varies during driving of hydrogen generation apparatus 60, it is possible to instantly detect the variation in the composition of the raw material gas by detecting the variation in the output of the selective oxidation air supply device 12, that is, the amount of operation in accordance with the variation in the pressure of the path which is caused by a variation in the amount of the hydrogen-containing gas generated. In addition, since it is possible to determine the composition of the raw material gas by using a typical selective oxidation flow rate in hydrogen generation apparatus 60, it is possible to realize a simple apparatus at a low cost.

### (Third Exemplary Embodiment)

Next, description will be given of hydrogen generation apparatus 70 according to a third exemplary embodiment not part of the claimed invention.

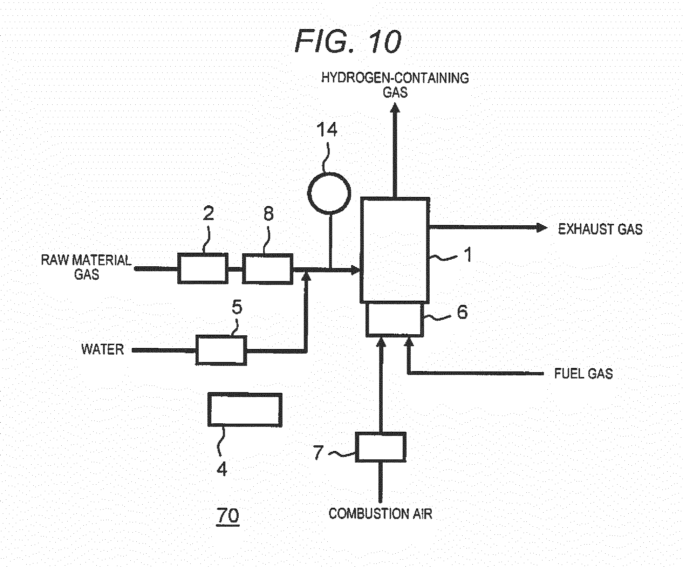

FIG. 10 is a view illustrating a schematic configuration of hydrogen generation apparatus 70 according to the third exemplary embodiment.

The same reference numerals will be given to portions which are the same as or correspond to those in the first exemplary embodiment illustrated in FIG. 1, and detailed description thereof will be omitted.

This exemplary embodiment relates to a configuration including pressure detector 14, which detects a pressure of a path including reforming unit 1 downstream of raw material supply device 2, as the hydrogen generation amount detection unit.

In hydrogen generation apparatus 70 according to this exemplary embodiment, pressure detector 14 is installed at an inlet of reforming unit 1, and a pressure measured during driving is 3.0 kPa. Furthermore, an installation position of pressure detector 14 is not limited to the example as long as a pressure caused by the amount of the hydrogen-containing gas generated can be detected at the position, and hydrogen generation apparatus 70 may have a configuration in which a pressure of an inlet portion of the raw material gas or an outlet of reforming unit 1 is detected.

Next, in description with respect to the characteristic operation in this exemplary embodiment, a difference from the first exemplary embodiment will be described, and the other configurations are set to be the same as in the first exemplary embodiment.

Controller 4 is configured to perform driving by setting a control parameter corresponding to the relatively low heat amount gas in a case where the pressure of pressure detector 14 decreases, and is configured to perform driving by setting a control parameter corresponding to the relatively high heat amount gas in a case where the pressure of pressure detector 14 increases.

Specifically, when hydrogen generation apparatus 70 is driven with a control parameter for a high heat amount gas, in a case where the pressure of pressure detector 14 decreases to a first pressure (here, 2.5 kPa) or lower, or in a case where the pressure of pressure detector 14 decreases by a second pressure (here, 0.5 kPa/one minute) to or higher in a predetermined time determined in advance, controller 4 drives hydrogen generation apparatus 70 after switching to a control parameter for low heat amount gas.

In addition, when hydrogen generation apparatus 70 is driven with the control parameter for the low heat amount gas, in a case where the pressure of pressure detector 14 increases to a third pressure (here, 3.5 kPa) or greater, or in a case where the pressure of pressure detector 14 increases by a fourth pressure (here, 0.5 kPa/one minute) or higher in a predetermined time determined in advance, controller 4 drives hydrogen generation apparatus 70 after switching to the control parameter for the high heat amount gas.

Furthermore, the same method as in the first exemplary embodiment can be used for the setting of the control parameter. Furthermore, as a configuration including control parameters corresponding to three or more gas species, an appropriate control parameter may be selected, or a continuous parameter may be set as function of the amount of heat.

According to this configuration, even when the composition of the raw material gas that is supplied varies during driving of hydrogen generation apparatus 70, it is possible to instantly detect a variation in the composition of the raw material gas by detecting the variation in the pressure of the path which is caused by a variation in the amount of the hydrogen-containing gas generated.

### (Fourth Exemplary Embodiment)

Next, description will be given of a hydrogen generation apparatus according to a fourth exemplary embodiment not part of the claimed invention.

This exemplary embodiment may have the same configuration as in the first exemplary embodiment illustrated in FIG. 1, and detailed description thereof will be omitted.

Next, in description with respect to the characteristic operation in this exemplary embodiment, a difference from the first exemplary embodiment will be described, and the other configurations are set to be the same as in the first exemplary embodiment.

Controller 4 controls raw material supply device 2 so that the flow rate of the raw material becomes a predetermined flow rate, is configured to perform driving by setting a control parameter corresponding to the relatively low heat amount gas in a case where the output of raw material supply device 2 decreases, and is configured to perform driving by setting a control parameter corresponding to the relatively high heat amount gas in a case where the output of raw material supply device 2 increases. Here, when the raw material gas is supplied in a flow rate of 3.0 NLM, the output of raw material supply device 2 is set to 70%.

Specifically, when the hydrogen generation apparatus is driven with a control parameter for a high heat amount gas, in a case where the output of raw material supply device 2 decreases to a fifth output (here, 60%) or less, or the output of raw material supply device 2 decreases by a sixth output (here, 10%/one minute) or greater in a predetermined time determined in advance, controller 4 drives the hydrogen generation apparatus after switching to a control parameter for a low heat amount gas.

In addition, when the hydrogen generation apparatus is driven with the control parameter for the low heat amount gas, in a case where the output of raw material supply device 2 increases to a seventh output (here, 80%) or greater, or the output of raw material supply device 2 increases by an eighth output (here, 10%/one minute) or greater in a predetermined time determined in advance, controller 4 drives the hydrogen generation apparatus after switching to the control parameter for the high heat amount gas.

The same method as in the first exemplary embodiment can be used for the setting of the control parameter. Furthermore, control parameters corresponding to three or more gas species may be provided, an appropriate control parameter may be selected, or a continuous parameter may be set as function of the amount of heat.

According to this configuration, even when the composition of the raw material gas that is supplied varies during driving of the hydrogen generation apparatus, it is possible to instantly detect a variation in the composition of the raw material gas by detecting the variation in the output of raw material supply device 2, that is, a variation in the amount of operation in accordance with a variation in the pressure of the path which is caused by the variation in the amount of the hydrogen-containing gas generated. In addition, since it is possible to determine the composition of the raw material gas by using the output of typical raw material supply device 2 in the hydrogen generation apparatus, and thus it is possible to realize a simple apparatus at a low cost.

Next, description will be given of fuel cell system 80 according to the invention.

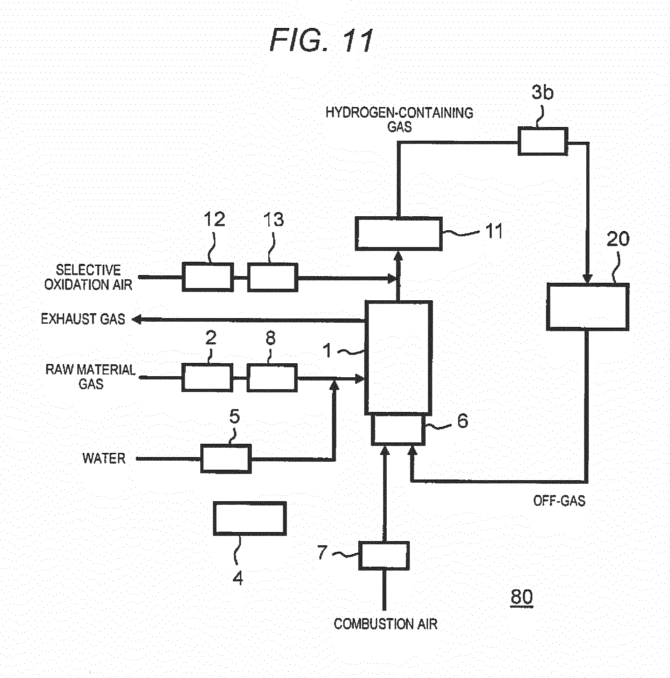

FIG. 11 is a view illustrating a schematic configuration of fuel cell system 80 according to the invention.

The same reference numerals will be given to portions which are the same as or correspond to those in the first exemplary embodiment illustrated in FIG. 1, and detailed description thereof will be omitted.

This exemplary embodiment relates to a configuration including fuel cell 20 that performs power generation by using the hydrogen-containing gas that is supplied from hydrogen generation apparatus 50. In addition, an anode flow meter 3b, which detects a flow rate of an anode inlet of fuel cell 20, is provided as the hydrogen generation amount detection unit.

Here, a polymer electrolyte fuel cell (PEFC) is used as fuel cell 20. In fuel cell 20, typically, a voltage decreases due to carbon monoxide, and thus it is necessary to reduce carbon monoxide to approximately 10 ppm or less in selective oxidation unit 11. Furthermore, the hydrogen-containing gas, which is obtained in reforming unit 1 and contains carbon monoxide, may be supplied to selective oxidation unit 11 after reducing carbon monoxide step by step through a converting catalyst.

Next, description will be given of a method of driving fuel cell system 80.

Controller 4 supplies the hydrogen-containing gas to an anode of fuel cell 20 as a fuel gas of fuel cell 20. In fuel cell 20, the fuel gas supplied to the anode and power generation air supplied to a cathode electrochemically react with each other to generate electricity, heat, and water.

Electricity that is obtained in fuel cell 20 is supplied to a power load (not illustrated) and is used therein. On the other hand, heat, which is generated in accordance with power generation, is recovered by a heat recovery unit (not illustrated), and is supplied to thermal load for various uses. In addition, an unreacted fuel gas (hereinafter, referred to as "off-gas"), which is not consumed at the inside of fuel cell 20, is supplied to combustor 6.

Controller 4 controls combustion air supply device 7 to supply combustion air necessary for combustion of the off-gas that is supplied to combustor 6. In combustor 6, the off-gas and the combustion air supplied from combustion air supply device 7 are mixed with each other, and the resultant mixed gas is combusted. According to this, heat necessary for a steam reforming reaction in reforming unit 1 is supplied. Here, a flow rate of the combustion air is controlled in such a manner that an air ratio, which represents a ratio of a flow rate of supply air to a theoretical air flow rate of the combustion air, becomes 1.7.

In addition, controller 4 calculates the amount of hydrogen generated from a hydrocarbon conversion rate calculated from a flow rate of the raw material which is detected by raw material flow rate detector 8, and a temperature detected by a reforming temperature detector (not illustrated), and issues an instruction for the amount of power generation in fuel cell 20 so that power generation can be performed in a predetermined hydrogen utilization range.

Here, for power generation, 750 W is issued as the amount of power generation instructed so that the hydrogen utilization becomes approximately 80%. Here, the hydrogen utilization may be set to approximately 70% to 85% for stable driving.

Next, description will be given of a characteristic operation in this exemplary embodiment. Here, a difference from the first exemplary embodiment will be described, and the other configurations are set to be the same as in the first exemplary embodiment.

### (Method of Detecting Amount of Hydrogen Generated)

First, description will be given of a method of detecting the amount of the hydrogen-containing gas generated in fuel cell system 80 of the invention.

Here, anode flow meter 3b is provided in an anode path as the hydrogen generation amount detection unit. In addition, as a method of determining whether or not the amount of generation decreases, a method capable of detecting a variation in the composition in a more reliable manner may be appropriately selected, for example, in consideration of a case where the amount of hydrogen-containing gas generated decreases by a predetermined value in a predetermined time or a case where the amount of the hydrogen-containing gas generated decreases to a predetermined flow rate threshold value in a predetermined time, a variation amount under typical driving conditions, and a behavior when a gas composition varies.

In contrast, with regard to a method of determining whether or not the generation amount increases, for example, it can be determined that the generation amount increases in a case where the amount of the hydrogen-containing gas generated increases by a predetermined value in a predetermined time, or in a case where the amount of the hydrogen-containing gas generated increases to a predetermined flow rate threshold value in a predetermined time. In addition, the values may be compared with each other after obtaining an average value for the predetermined time.

In addition, here, a method of directly detecting the amount of the hydrogen-containing gas generated by using anode flow meter 3b is used. However, for example, a variation in the composition of the raw material gas may be detected by detecting a variation in a pressure loss by using a pressure detector, or by indirectly detecting a variation in a pressure, which is caused by a variation in a flow rate of the anode path, by using the flow rate of the selective oxidation flow meter, the output of selective oxidation air supply device 12, the output of raw material supply device 2, and the like.

In addition, the amount of hydrogen generated varies in accordance with a desired power generation output in fuel cell 20. Accordingly, when the output of fuel cell 20 is in a predetermined range, the setting may be changed. In addition, if the amount of variation per predetermined time in the output of fuel cell 20 is in a predetermined range, the setting may be changed. On the other hand, a generated power may be changed, for example, in accordance with a load.

Controller 4 may correct the amount of the hydrogen-containing gas generated, which is detected by the hydrogen generation amount detection unit, on the basis of the output of fuel cell 20. In addition, even when correcting a threshold value for changing of the control parameter, the same effect is obtained.

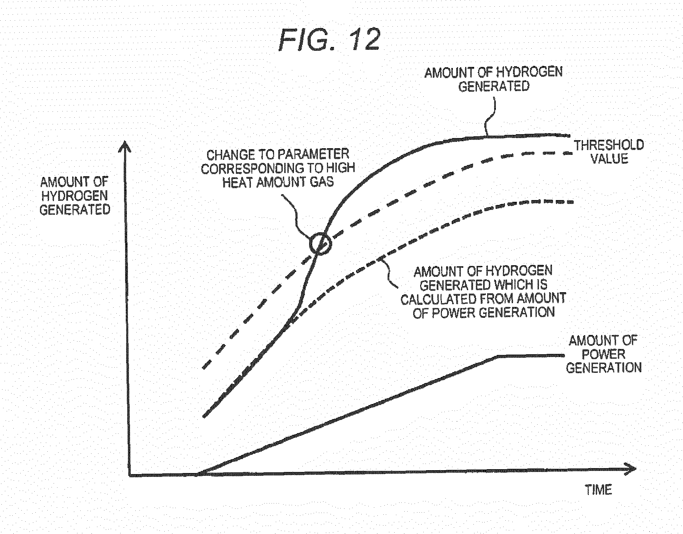

FIG. 12 is a view illustrating a corrected image of the amount of the hydrogen-containing gas generated in accordance with a variation in an output of fuel cell 20 in the invention.

Typically, for example, control of increasing the flow rate of the raw material is performed on the basis of a variation in the amount of power generation. The amount of hydrogen generated also increases in accordance with an increase in the flow rate of the raw material. However, for example, when a variation in the amount of hydrogen generated, which is greater than an amount appropriate for an increase in the flow rate of the raw material, occurs, a variation in the composition of the raw material gas can be detected.

### (Method of Setting Control Parameter)

Next, description will be given of a method of setting a control parameter of fuel cell system 80 according to this exemplary embodiment.

As the control parameter, a parameter relating to driving of fuel cell 20 is set in addition to a parameter of hydrogen generation apparatus 50 in the first exemplary embodiment.

Typically, in a case of a low heat amount gas, a relatively large flow rate of raw material is necessary so as to generate a predetermined amount of hydrogen generated, but it may be difficult to supply an excessive flow rate due to a configuration of a device that is used. Therefore, when performing power generation in a predetermined hydrogen utilization range, there is a possibility that power generation can be performed only in the amount of power generation suitable for the amount of hydrogen, that is, it is necessary to lower the amount of power generation.

In addition, during switching from the relatively high heat amount gas to the low heat amount gas, if the amount of power generation is the same in each case, a flow rate of a gas to be combusted in combustor 6 decreases in accordance with a decrease in the amount of hydrogen. That is, in a case where a flow rate of the combustion air is the same, there is a possibility that the flow rate of the combustion air may be excessive with respect to the flow rate of the gas to be combusted. Here, as illustrated in FIG. 6, when a combustion air ratio becomes excessive, it is difficult to maintain appropriate combustion, and thus there is a possibility that carbon monoxide may occur.

In contrast, during switching from the relatively low heat amount gas to the high heat amount gas, if the amount of power generation is the same, the flow rate of the gas to be combusted in combustor 6 increases in accordance with an increase in the amount of hydrogen. That is, in a case where the flow rate of the combustion air is the same, there is a possibility that the flow rate of the combustion air may be excessively small with respect to the flow rate of the gas to be combusted. When the combustion air ratio becomes excessively small, it is difficult to maintain appropriate combustion, and thus there is a possibility that carbon monoxide may occur.

Accordingly, in a case where the amount of the hydrogen-containing gas generated, which is detected by anode flow meter 3b as the hydrogen generation amount detection unit, decreases, driving is performed by setting a control parameter corresponding to a relatively low heat amount, and in a case where the amount of the hydrogen-containing gas generated increases, driving is performed by setting a control parameter corresponding to a relatively high heat amount.

Specifically, in a case where the amount of generation decreases, for example, driving may be performed by decreasing the amount of power generation in fuel cell 20. In contrast, in a case where the amount of hydrogen generated increases, the amount of power generation in fuel cell 20 may be increased. Here, when driving is performed at 750 W by using a parameter corresponding to a high heat amount, in a case where the amount of hydrogen generated decreases, control is performed to decrease the amount of power generation to 600 W.

In fuel cell 20, it is necessary to perform driving by maintaining the hydrogen utilization in an appropriate range, and in a case where the raw material gas is switched to the low heat amount gas, and the amount of hydrogen generated decreases, the amount of power generation is lowered, and thus stable driving is possible. In addition, there is a possibility that the combustion air may be excessive in accordance with a decrease in the amount of the off-gas in fuel cell 20, and thus combustion properties may deteriorate, but it is possible to maintain the combustion properties by decreasing the amount of power generation in the same manner.

Furthermore, the amount of power generation may be returned to the original value after changing a parameter (for example, the flow rate of the raw material gas) other than the amount of power generation to a parameter corresponding to a low heat amount, that is, after the amount of hydrogen generated becomes an appropriate amount. According to this configuration, it is possible to perform stable driving with an appropriate amount of power generation.

In addition, the amount of hydrogen generated increases on the basis of an input from an outer side, for example, in a case of fuel cell 20, a command of increasing the power generation output. After correcting the amount of hydrogen generated which varies due to the input (command) from an outer side, the control parameter may be set by determining whether or not the amount of the hydrogen-containing gas generated, which is detected by the hydrogen generation amount detection unit, varies.

Furthermore, control parameters corresponding to three or more gas species may be provided, an appropriate control parameter may be selected, or a continuous parameter may be set as function of the amount of heat.

According to this configuration, even when the composition of the raw material gas that is supplied varies during driving of fuel cell system 80, it is possible to instantly detect a variation in the composition of the raw material gas by detecting a variation in the amount of the hydrogen-containing gas generated, for example, without waiting a variation in a reforming temperature, and the like.

In addition, when a control parameter corresponding to the composition of the raw material gas is set, particularly, when the amount of power generation is set in correspondence with the amount of heat of the raw material gas on the basis of the resultant detection result, it is possible to realize fuel cell system 80 that can be stably driven. In addition, it is possible to maintain stable combustion in which occurrence of carbon monoxide is suppressed.

### (Modification Example 1)

Next, description will be given of Modification Example 1 of fuel cell system 80 according to the invention.

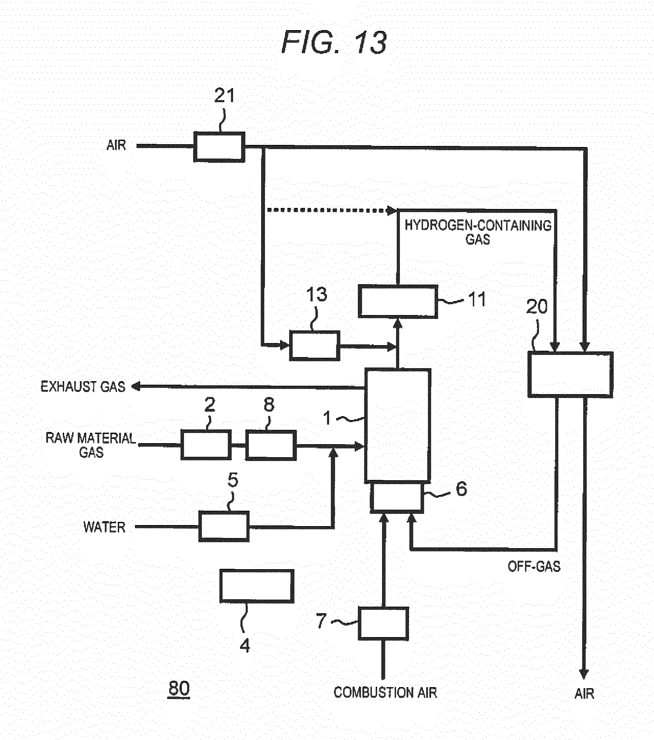

FIG. 13 is a view illustrating a schematic configuration of fuel cell system 80 in Modification Example 1 of the invention.

The same reference numerals will be given to portions which are the same as or correspond to those in the above embodiment illustrated in FIG. 11, and detailed description thereof will be omitted.

This modification example relates to a configuration including cathode air supply device 21 that supplies air to a cathode of fuel cell 20. In addition, cathode air supply device 21 is configured to be controlled so that selective oxidation air is supplied to selective oxidation unit 11 after diverging from a cathode air supply path of fuel cell 20, and a flow rate, which is detected by selective oxidation air flow rate detector 13, becomes a predetermined flow rate. Furthermore, as cathode air supply device 21, an air blower is used.

In addition, when a slight amount of carbon monoxide remains in the hydrogen-containing gas, carbon monoxide may be adsorbed to the anode during power generation in fuel cell 20, and thus power generation performance may deteriorate. Accordingly, a part of air supplied from cathode air supply device 21 may be added to the hydrogen-containing gas to be supplied to the anode of fuel cell 20.

Next, **in** description with respect to the characteristic operation **in** Modification Example 1, a difference from the above embodiment will be described, and the other configurations are set to be the same as **in** the above embodiment.

The hydrogen generation amount detection unit detects a variation **in a** pressure which is caused by a variation **in** a flow rate of the anode path of fuel cell 20. Specifically, a variation **in** the pressure is detected from a variation **in** the output of cathode air supply device 21, a variation **in** the flow rate of the selective oxidation air, or a variation **in** the anode air flow rate.

In a case where the output of cathode air supply device 21 decreases, in a case where the flow rate of the selective oxidation air increases, or in a case where the anode air flow rate increases, controller 4 performs driving by setting a control parameter corresponding to the relatively low heat amount gas. In contrast, in a case where the output of cathode air supply device 21 increases, in a case where the flow rate of the selective oxidation air decreases, or in a case where the anode air flow rate decreases, controller 4 performs driving by setting a control parameter corresponding to the relatively high heat amount gas.

Furthermore, control parameters corresponding to three or more gas species may be provided, an appropriate control parameter may be selected, or a continuous parameter may be set as function of the amount of heat.

According to this configuration, in an apparatus in which devices are simplified, it is possible to indirectly detect a variation in the amount of the hydrogen-containing gas generated from a variation in a pressure, and thus it is possible to realize a simple fuel cell system in which the cost is reduced.

### (Modification Example 2)

Next, description will be given of Modification Example 2 of fuel cell system 80 according to the invention.

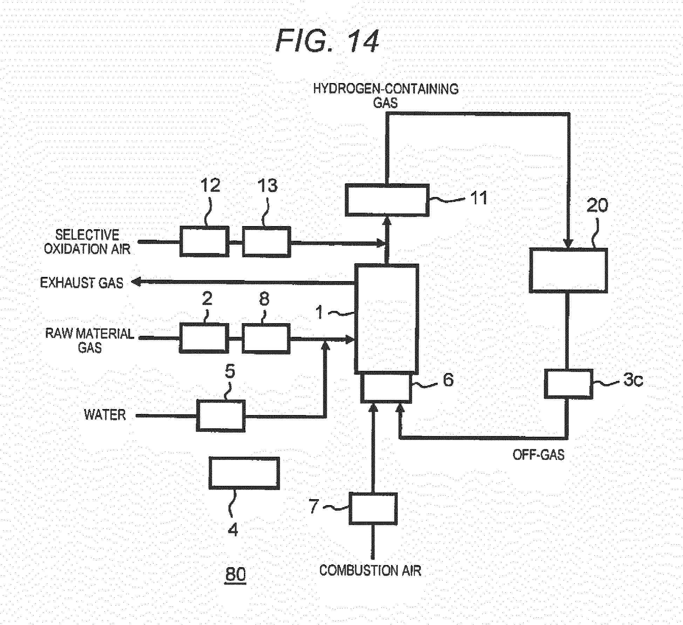

FIG. 14 is a view illustrating a schematic configuration of fuel cell system 80 in Modification Example 2 of the invention.

Here, the same reference numerals will be given to portions which are the same as or correspond to those in the above embodiment illustrated in FIG. 11, and detailed description thereof will be omitted.

This modification example relates to a configuration including off-gas flow meter 3c as the hydrogen generation amount detection unit in an off-gas path on an outlet of the anode of fuel cell 20 as the hydrogen generation amount detection unit.

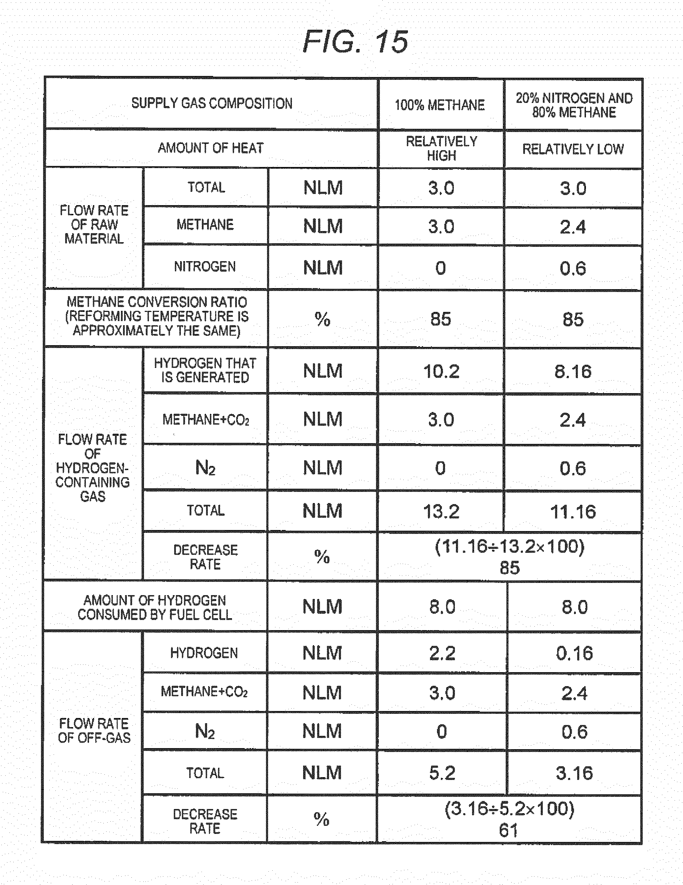

FIG. 15 is a view illustrating a variation in a flow rate of an off-gas in a case where a power generation output of fuel cell 20, that is, a current value and the amount of hydrogen consumed are the same between a case where a gas composed of 100% methane is supplied and a case where a gas composed of 20% nitrogen/80% methane is supplied in Modification Example 2 of the invention.$

When switching to a low heat amount gas, the flow rate of the off-gas decreases to approximately 61%. At this time, a pressure loss of a flow path decreases to approximately 37% by 0.61×0.61. That is, as illustrated in FIG. 15, in a case where an inert gas and a gas composed of 20% nitrogen/80% methane, which is the relatively low heat amount gas are supplied, the amount of hydrogen generated decreases. However, in a case where the amount of power generation is the same in each case, the flow rate of the off-gas in fuel cell 20 and a pressure loss of the path caused by the flow rate significantly decrease.

Accordingly, it is possible to detect a variation in the composition of the raw material gas in a more remarkable manner by detecting the amount of the hydrogen-containing gas generated in the off-gas path, and the variation can be reliably determined, and thus it is possible to realize a fuel cell system that can be stably driven.

Furthermore, in this modification example, the flow rate of the off-gas is directly detected by using off-gas flow meter 3c. However, a variation in the composition of the raw material gas may be detected, for example, by detecting a variation in the pressure, or by indirectly detecting a variation in the pressure, which is caused by a variation in the flow rate of the off-gas path, by using the flow rate of the selective oxidation flow meter, the output of selective oxidation air supply device 12, the output of raw material supply device 2, and the like.

Furthermore, control parameters corresponding to three or more gas species may be provided, an appropriate control parameter may be selected, or a continuous parameter may be set as function of the amount of heat.

According to this configuration, it is possible more instantly and reliably to detect a variation in the amount of the hydrogen-containing gas generated, which is caused by a variation in the composition of the raw material gas, by detecting a variation in the flow rate of the off-gas path or a variation in the pressure which is caused by a variation in the flow rate. According to this, it is possible to perform power generation suitable for the amount of heat of the raw material gas, and thus it is possible to realize a fuel cell system that can be more stably driven. In addition, it is possible to maintain stable combustion in which occurrence of carbon monoxide is suppressed.

According to a second aspect, the hydrogen generation apparatus according to the first aspect further includes a selective oxidation unit that selectively oxidizes and removes carbon monoxide contained in the hydrogen-containing gas by using oxygen, a selective oxidation air supply device that supplies selective oxidation air to the selective oxidation unit, a selective oxidation air flow rate detector that detects a flow rate of the selective oxidation air. The hydrogen generation amount detection unit is a selective oxidation air flow rate detector, and the controller is configured to drive the raw material supply device by setting a control parameter corresponding to the relatively low heat amount gas in a case where a flow rate of the selective oxidation air increases, and is configured to drive the raw material supply device by setting a control parameter corresponding to the relatively high heat amount gas in a case where the flow rate of the selective oxidation air decreases.

According to this configuration, even when the composition of the raw material gas that is supplied varies during driving of the hydrogen generation apparatus, it is possible to instantly detect a variation in the composition of the raw material gas by detecting a variation in the flow rate of the selective oxidation air in accordance with a variation in a pressure of a path which is caused by a variation in the amount of the hydrogen-containing gas generated. In addition, when a control parameter corresponding to the composition of the raw material gas is set on the basis of the resultant detection result, the amount of hydrogen generated is appropriately maintained, and thus it is possible to realize a hydrogen generation apparatus capable of being stably driven.

According to a third aspect, the hydrogen generation apparatus according to the first aspect further includes a selective oxidation unit that selectively oxidizes and removes carbon monoxide contained in the hydrogen-containing gas by using oxygen, a selective oxidation air supply device that supplies selective oxidation air to the selective oxidation unit, and a selective oxidation air flow rate detector that detects a flow rate of the selective oxidation air. The controller controls the selective oxidation air supply device so that a flow rate of the selective oxidation air becomes a predetermined flow rate, and is configured to drive the raw material supply device by setting a control parameter corresponding to the relatively low heat amount gas in a case where an output of the selective oxidation air supply device decreases, and is configured to drive the raw material supply device by setting a control parameter corresponding to the relatively high heat amount gas in a case where the output of the selective oxidation air supply device increases.

According to this configuration, even when the composition of the raw material gas that is supplied varies during driving of the hydrogen generation apparatus, it is possible to instantly detect a variation in the composition of the raw material gas by detecting a variation in the output of the selective oxidation air supply device, that is, the amount of operation in accordance with a variation in a pressure of a path which is caused by a variation in the amount of the hydrogen-containing gas generated. In addition, when a control parameter corresponding to the composition of the raw material gas is set on the basis of the resultant detection result, the amount of hydrogen generated is appropriately maintained, and thus it is possible to realize a hydrogen generation apparatus capable of being stably driven.

According to a fourth aspect, the hydrogen generation apparatus according to the first aspect further includes a pressure detector that detects a pressure of a path including the reforming unit downstream of the raw material supply device. The hydrogen generation amount detection unit is the pressure detector, and the controller configured to drive the raw material supply device by setting a control parameter corresponding to the relatively low heat amount gas in a case where the pressure of the pressure detector decreases, and is configured to drive the raw material supply device by setting a control parameter corresponding to the relatively high heat amount gas in a case where the pressure of the pressure detector increases.

According to this configuration, even when the composition of the raw material gas that is supplied varies during driving of the hydrogen generation apparatus, it is possible to instantly detect the variation in the composition of the raw material gas by detecting a variation in a pressure of a path which is caused by the variation in the amount of the hydrogen-containing gas generated. In addition, when a control parameter corresponding to the composition of the raw material gas is set on the basis of the resultant detection result, the amount of hydrogen generated is appropriately maintained, and thus it is possible to realize a hydrogen generation apparatus capable of being stably driven.

According to a fifth aspect, the hydrogen generation apparatus according to the first aspect further includes a raw material flow rate detector that detects a flow rate of the raw material. The controller controls the raw material supply device so that the flow rate of the raw material becomes a predetermined flow rate, and is configured to drive the raw material supply device by setting a control parameter corresponding to the relatively low heat amount gas in a case where an output of the raw material supply device decreases, and is configured to drive the raw material supply device by setting a control parameter corresponding to the relatively high heat amount gas in a case where the output of the raw material supply device increases.

According to this configuration, even when the composition of the raw material gas that is supplied varies during driving of the hydrogen generation apparatus, it is possible to instantly detect a variation in the composition of the raw material gas by detecting a variation in the output of the raw material supply device, that is, the amount of operation in accordance with a variation in a pressure of a path which is caused by a variation in the amount of the hydrogen-containing gas generated. In addition, when a control parameter corresponding to the composition of the raw material gas is set on the basis of the resultant detection result, the amount of hydrogen generated is appropriately maintained, and thus it is possible to realize a hydrogen generation apparatus capable of being stably driven.

According to a sixth aspect, in the hydrogen generation apparatus according to any one of the first aspect to the fifth aspect, the low heat amount gas contains a large amount of inert gas in comparison to the high heat amount gas.

According to this configuration, in a case where the inert gas is contained in the raw material, a flow rate of the raw material, which does not contribute to hydrogen generation, increases in the flow rate of the raw material gas, and thus it is possible to detect a variation in the amount of the hydrogen-containing gas generated with the hydrogen generation amount detection unit in a more remarkable manner.

According to the first aspect, when a parameter that contributes to the amount of the hydrogen-containing gas generated is in a predetermined range, the controller is configured to drive the raw material supply device by setting a control parameter corresponding to the relatively low heat amount gas in a case where the amount of the hydrogen-containing gas generated decreases, and is configured to drive the raw material supply device by setting a control parameter corresponding to the relatively high heat amount gas in a case where the amount of the hydrogen-containing gas generated increases.

According to this configuration, in a case where the parameter that contributes the amount of the hydrogen-containing gas generated is in a predetermined range, an increase or a decrease in the amount of the hydrogen-containing gas generated is detected without depending only the amount of the hydrogen-containing gas generated which varies due to an external factor, and thus it is possible to realize a hydrogen generation apparatus which is capable of determining the amount of the hydrogen-containing gas generated in a stable and reliable manner.

According to the first aspect, when the amount of variation in a parameter that contributes to the amount of the hydrogen-containing gas generated is in a predetermined range, the controller is configured to drive the raw material supply device by setting a control parameter corresponding to the relatively low heat amount gas in a case where the amount of the hydrogen-containing gas generated decreases, and is configured to drive the raw material supply device by setting a control parameter corresponding to the relatively high heat amount gas in a case where the amount of the hydrogen-containing gas generated increases.

According to this configuration, even when an external factor that contributes to the amount of the hydrogen-containing gas generated varies, in a case where the amount of the variation is in a predetermined range, an increase or a decrease in the amount of the hydrogen-containing gas generated is detected, and thus it is possible to realize a hydrogen generation apparatus which is capable of determining the amount of the hydrogen-containing gas generated in a stable and reliable manner.

According to a ninth aspect, in the hydrogen generation apparatus according to any one of the first aspect to the sixth aspect, the controller is configured to correct the amount of the hydrogen-containing gas generated, which is detected by the hydrogen generation amount detection unit, on the basis of a parameter that contributes to the amount of the hydrogen-containing gas generated.

According to this configuration, even when an external factor that contributes to the amount of the hydrogen-containing gas generated varies, correction is performed, and thus it is possible to realize a hydrogen generation apparatus which is capable of determining the amount of the hydrogen-containing gas generated in a stable and reliable manner.

According to an eleventh aspect, the controller is configured to drive the combustion air supply device by setting a control parameter corresponding to the relatively low heat amount gas in a case where the amount of the hydrogen-containing gas generated decreases, and is configured to drive the combustion air supply device by setting a control parameter corresponding to the relatively high heat amount gas in a case where the amount of the hydrogen-containing gas generated increases.

According to this configuration, even when the composition of the raw material gas that is supplied varies during driving of the hydrogen generation apparatus, the amount of the hydrogen-containing gas generated varies in accordance with a variation in the composition of the raw material gas, and thus it is possible to instantly detect the variation in the composition of the raw material gas by detecting the variation in the amount of the hydrogen-containing gas generated. In addition, when a control parameter of the combustion air supply device, which corresponds to the composition of the raw material gas, is set on the basis of the resultant detection result, the amount of hydrogen generated is appropriately maintained, and thus it is possible to realize a hydrogen generation apparatus capable of being stably driven.

According to the first aspect, there is provided a fuel cell system as defined in claim 1.

According to this configuration, even when the composition of the raw material gas that is supplied varies during driving of the fuel cell system, it is possible to instantly detect a variation in the composition of the raw material gas by detecting the variation in the amount of the hydrogen-containing gas generated. In addition, when a control parameter corresponding to the composition of the raw material gas is set on the basis of the resultant detection result, the amount of hydrogen generated is appropriately maintained, and thus it is possible to realize a fuel cell system capable of being stably driven.

According to this configuration, in a case where the output of the fuel cell is in a predetermined range, an increase or a decrease in the amount of the hydrogen-containing gas generated is detected, and thus in a case where the output of the fuel cell is in a predetermined range, it is possible to realize a fuel cell system which is capable of determining the amount of the hydrogen-containing gas generated in a stable and reliable manner.

According to this configuration, even when the output of the fuel cell is allowed to vary, in a case where the amount of variation in the amount of the hydrogen-containing gas generated in accordance with the variation in the output is in a predetermined range, an increase or a decrease in the amount of the hydrogen-containing gas generated is detected, and thus it is possible to realize a fuel cell system which is capable of determining the amount of the hydrogen-containing gas generated in a stable and reliable manner.

According to a fifteenth aspect, in the fuel cell system according to the twelfth aspect, the controller is configured to correct the amount of the hydrogen-containing gas generated, which is detected by the hydrogen generation amount detection unit, on the basis of the output of the fuel cell.

According to this configuration, even when the output of the fuel cell varies, an increase or a decrease in the amount of the hydrogen-containing gas generated, which is based on an increase or a decrease in the output, is corrected, and thus it is possible to realize a fuel cell system which is capable of determining the amount of the hydrogen-containing gas generated in a stable and reliable manner.

According to a tenth aspect, the controller is configured to drive the water supply device by setting a control parameter corresponding to the relatively low heat amount gas in a case where the amount of the hydrogen-containing gas generated decreases, and is configured to drive the water supply device by setting a control parameter corresponding to the relatively high heat amount gas in a case where the amount of the hydrogen-containing gas generated increases.

According to this configuration, even when the composition of the raw material gas that is supplied varies during driving of the hydrogen generation apparatus, the amount of the hydrogen-containing gas generated varies in accordance with a variation in the composition of the raw material gas, and thus it is possible to instantly detect the variation in the composition of the raw material gas by detecting the variation in the amount of the hydrogen-containing gas generated. In addition, when a control parameter of the water supply device, which corresponds to the composition of the raw material gas, is set on the basis of the resultant detection result, the amount of hydrogen generated is appropriately maintained, and thus it is possible to realize a hydrogen generation apparatus capable of being stably driven.

According to a eleventh aspect, the controller is configured to drive the combustion air supply device by setting a control parameter corresponding to the relatively low heat amount gas in a case where the amount of the hydrogen-containing gas generated decreases, and is configured to drive the combustion air supply device by setting a control parameter corresponding to the relatively high heat amount gas in a case where the amount of the hydrogen-containing gas generated increases.

According to this configuration, even when the composition of the raw material gas that is supplied varies during driving of the hydrogen generation apparatus, the amount of the hydrogen-containing gas generated varies in accordance with a variation in the composition of the raw material gas, and thus it is possible to instantly detect the variation in the composition of the raw material gas by detecting the variation in the amount of the hydrogen-containing gas generated. In addition, when a control parameter of the combustion air supply device, which corresponds to the composition of the raw material gas, is set on the basis of the resultant detection result, the amount of hydrogen generated is appropriately maintained, and thus it is possible to realize a hydrogen generation apparatus capable of being stably driven.

According to an eighteenth aspect, there is provided a method of driving a hydrogen generation apparatus as defined in claim 9.

According to the driving method, even when the composition of the raw material gas that is supplied varies during driving of the hydrogen generation apparatus, it is possible to instantly detect a variation in the composition of the raw material gas by detecting the variation in the amount of the hydrogen-containing gas generated. In addition, when a control parameter corresponding to the composition of the raw material gas is set on the basis of the resultant detection result, the amount of hydrogen generated is appropriately maintained, and thus it is possible to realize a method of driving a hydrogen generation apparatus capable of being stably driven.

### INDUSTRIAL APPLICABILITY

As described above, according to the invention, even when the composition of the raw material gas, that is, the amount of heat varies during driving, a variation in the composition of the raw material gas is instantly detected by instantly detecting a variation in the amount of the hydrogen-containing gas generated, and an appropriate parameter is set. According to this, it is possible to exhibit a remarkable effect in which stable driving is possible. Accordingly, the invention is particularly useful for a case where the composition of the raw material gas may vary with the passage of time, and is useful for a hydrogen generation apparatus that reforms a hydrocarbon-containing raw material gas such as a dispersive solid polymer type and a solid oxide type to generate hydrogen, a driving method thereof, a fuel cell system including a fuel cell that performs power generation by using the hydrogen-containing gas that is obtained in the hydrogen generation apparatus, and the like.

### REFERENCE SIGNS LIST

- 1: Reforming unit
- 2: Raw material supply device
- 3a: Hydrogen-containing gas flow meter
- 3b: Anode flow meter
- 3c: Off-gas flow meter
- 4: Controller
- 5: Water supply device
- 6: Combustor
- 7: Combustion air supply device
- 8: Raw material flow rate detector
- 11: Selective oxidation unit
- 12: Selective oxidation air supply device
- 13: Selective oxidation air flow rate detector
- 14: Pressure detector
- 20: Fuel cell
- 21: Cathode air supply device
- 50, 60, 70: Hydrogen generation apparatus
- 80: Fuel cell system

## Claims

1. A fuel cell system, comprising:
a hydrogen generation apparatus (50, 60, 70); and
a fuel cell (20),
the hydrogen generation apparatus (50, 60, 70) comprising:
a reforming unit (1) that reforms a raw material to generate a hydrogen-containing gas for supply to the fuel cell (20) as a fuel gas;
a raw material supply device (2) that supplies the raw material to the reforming unit (1);
a water supply device (5) that supplies water to the reforming unit (1); and
a combustor (6) that combusts the raw material or part of the fuel gas which is not consumed at the fuel cell (20);
a combustion air supply device (7) that supplies combustion air to the combustor (6); and
a hydrogen generation amount detection unit (3a, 13, 14, 8) that detects an amount of the hydrogen-containing gas generated; and
a controller (4); and
wherein the fuel cell (20) performs power generation by using the hydrogen-containing gas that is supplied from the hydrogen generation apparatus (50, 60, 70),
**characterized in that**
when a parameter that contributes to the amount of the hydrogen-containing gas generated is in a predetermined range, or when an amount of variation in a parameter that contributes to the amount of the hydrogen-containing gas generated is in a predetermined range, the controller (4) is configured to drive the raw material supply device (2) by setting a control parameter corresponding to a relatively low heat amount gas in a case where the amount of the hydrogen-containing gas generated decreases, and is configured to drive the raw material supply device (2) by setting a control parameter corresponding to a relatively high heat amount gas in a case where the amount of the hydrogen-containing gas generated increases,
wherein the control parameter is any one of an amount of the supplied raw material, an amount of water supplied, and a flow rate of the combustion air, and
wherein the parameter is at least one of a composition of the raw material, an ambient environment temperature, and a pressure of the raw material.

2. The fuel cell system according to claim 1, wherein the hydrogen generation apparatus further comprises:
a selective oxidation unit (11) that selectively oxidizes and removes carbon monoxide contained in the hydrogen-containing gas by using oxygen;
a selective oxidation air supply device (12) that supplies selective oxidation air to the selective oxidation unit (11); and
a selective oxidation air flow rate detector (13) that detects a flow rate of the selective oxidation air,
wherein the hydrogen generation amount detection unit is the selective oxidation air flow rate detector (13), and
the controller (4) is configured to drive the raw material supply device (2) by setting the control parameter corresponding to the relatively low heat amount gas in a case where a flow rate of the selective oxidation air increases, and is configured to drive the raw material supply device by setting the control parameter corresponding to the relatively high heat amount gas in a case where the flow rate of the selective oxidation air decreases.

3. The fuel cell system according to claim 1, wherein the hydrogen generation apparatus further comprises:
a selective oxidation unit (11) that selectively oxidizes and removes carbon monoxide contained in the hydrogen-containing gas by using oxygen;
a selective oxidation air supply device (12) that supplies selective oxidation air to the selective oxidation unit (11); and
a selective oxidation air flow rate detector (13) that detects a flow rate of the selective oxidation air,
wherein the controller (4) controls the selective oxidation air supply device (12) so that the flow rate of the selective oxidation air becomes a predetermined flow rate, is configured to drive the raw material supply device (2) by setting the control parameter corresponding to the relatively low heat amount gas in a case where an output of the selective oxidation air supply device decreases, and is configured to drive the raw material supply device by setting the control parameter corresponding to the relatively high heat amount gas in a case where the output of the selective oxidation air supply device increases.

4. The fuel cell system according to claim 1, wherein the hydrogen generation apparatus further comprises:
a pressure detector (14) that detects a pressure of a path including the reforming unit (1) downstream of the raw material supply device (2),
wherein the hydrogen generation amount detection unit is the pressure detector (14),
the controller (4) is configured to drive the raw material supply device (2) by setting a control parameter corresponding to the relatively low heat amount gas in a case where the pressure detected by the pressure detector (14) decreases, and is configured to drive the raw material supply device by setting a control parameter corresponding to the relatively high heat amount gas in a case where the pressure detected by the pressure detector (14) increases.

5. The fuel cell system according to claim 1, wherein the hydrogen generation apparatus further comprises:
a raw material flow rate detector (8) that detects a flow rate of the raw material,
wherein the controller (4) controls the raw material supply device (2) so that the flow rate of the raw material becomes a predetermined flow rate, is configured to drive the raw material supply device (2) by setting the control parameter corresponding to the relatively low heat amount gas in a case where an output of the raw material supply device (2) decreases, and is configured to drive the raw material supply device (2) by setting the control parameter corresponding to the relatively high heat amount gas in a case where the output of the raw material supply device (2) increases.

6. The fuel cell system of claim 1, wherein the controller (4) is configured to correct the amount of the hydrogen-containing gas generated, which is detected by the hydrogen generation amount detection unit, on the basis of an output of the fuel cell (20).

7. The fuel cell system of any one of claims 1 to 6,
wherein the controller (4) is configured to drive the water supply device (5) by setting the control parameter corresponding to the relatively low heat amount gas in a case where the amount of the hydrogen-containing gas generated decreases, and is configured to drive the water supply device (5) by setting the control parameter corresponding to the relatively high heat amount gas in a case where the amount of the hydrogen-containing gas generated increases.

8. The fuel cell system of any one of claims 1 to 7,
wherein the controller (4) is configured to drive the combustion air supply device (7) by setting the control parameter corresponding to the relatively low heat amount gas in a case where the amount of the hydrogen-containing gas generated decreases, and is configured to drive the combustion air supply device (7) by setting the control parameter corresponding to the relatively high heat amount gas in a case where the amount of the hydrogen-containing gas generated increases.

9. A method of driving a hydrogen generation apparatus including a reforming unit (1) that reforms a raw material to generate a hydrogen-containing gas for supply to a fuel cell (20) of a fuel cell system as a fuel gas, a raw material supply device (2) that supplies the raw material to the reforming unit (1), a water supply device (5) that supplies water to the reforming unit (1), a combustor (6) that combusts the raw material or part of the fuel gas which is not consumed at the fuel cell (20), and a combustion air supply device (7) that supplies combustion air to the combustor (6), wherein the fuel cell (20) performs power generation by using the hydrogen-containing gas that is supplied from the hydrogen generation apparatus (50, 60, 70), the method **characterized by** comprising:
when a parameter that contributes to the amount of the hydrogen-containing gas generated is in a predetermined range, or when an amount of variation in a parameter that contributes to the amount of the hydrogen-containing gas generated is in a predetermined range, a step of driving the raw material supply device (2) by setting a control parameter corresponding to a relatively low heat amount gas in a case where an amount of the hydrogen-containing gas generated decreases, or a step of driving the raw material supply device (2) by setting a control parameter corresponding to a relatively high heat amount gas in a case where the amount of the hydrogen-containing gas generated increases,
wherein the control parameter is any one of an amount of the supplied raw material, an amount of water supplied, and a flow rate of the combustion air, and
wherein the parameter is at least one of a composition of the raw material, an ambient environment temperature, and a pressure of the raw material.

10. The method according to claim 9, wherein the low heat amount gas contains a large amount of an inert gas in comparison to the high heat amount gas.

## Patentansprüche

1. Brennstoffzellensystem, umfassend:
eine Wasserstofferzeugungsvorrichtung (50, 60, 70); und
eine Brennstoffzelle (20),
wobei die Wasserstofferzeugungsvorrichtung (50, 60, 70) umfasst:
eine Reformiereinheit (1), die einen Rohstoff reformiert, um ein wasserstoffhaltiges Gas zu erzeugen, das der Brennstoffzelle (20) als Brenngas zugeführt wird;
eine Rohstoffzufuhrvorrichtung (2), die den Rohstoff der Reformiereinheit (1) zuführt; und
eine Wasserzufuhrvorrichtung (5), die der Reformiereinheit (1) Wasser zuführt; und eine Brennkammer (6), die den Rohstoff oder den Teil des Brenngases verbrennt, der nicht in der Brennstoffzelle (20) verbraucht wird;
eine Verbrennungsluftzufuhrvorrichtung (7), die der Brennkammer (6) Verbrennungsluft zuführt; und
eine Wasserstofferzeugungsmengen-Erfassungseinheit (3a, 13, 14, 8), die eine Menge des erzeugten wasserstoffhaltigen Gases erfasst; und
eine Steuerung (4); und
wobei die Brennstoffzelle (20) unter Verwendung des wasserstoffhaltigen Gases, das von der Wasserstofferzeugungsvorrichtung (50, 60, 70) zugeführt wird, eine Stromerzeugung durchführt,
**dadurch gekennzeichnet, dass**
wenn ein Parameter, der zu der Menge des erzeugten wasserstoffhaltigen Gases beiträgt, in einem vorgegebenen Bereich liegt, oder wenn eine Mengenänderung eines Parameters, der zu der Menge des erzeugten wasserstoffhaltigen Gases beiträgt, in einem vorgegebenen Bereich liegt, die Steuerung (4) dazu konfiguriert ist, die Rohstoffzufuhrvorrichtung (2) durch Einstellen eines Steuerparameters anzusteuern, der Gas mit einer relativ niedrigen Wärmemenge entspricht, wenn die Menge des erzeugten wasserstoffhaltigen Gases abnimmt, und dazu konfiguriert ist, die Rohstoffzufuhrvorrichtung (2) durch Einstellen eines Steuerparameters anzusteuern, der Gas mit einer relativ hohen Wärmemenge entspricht, wenn die Menge des erzeugten wasserstoffhaltigen Gases zunimmt,
wobei der Steuerparameter eines aus einer Menge des zugeführten Rohstoffs, einer Menge des zugeführten Wassers und einer Durchflussrate der Verbrennungsluft ist, und
wobei der Parameter mindestens eines aus einer Zusammensetzung des Rohstoffs, einer Umgebungstemperatur und einem Druck des Rohstoffs ist.

2. Brennstoffzellensystem nach Anspruch 1, wobei die Wasserstofferzeugungsvorrichtung des Weiteren umfasst:
eine selektive Oxidationseinheit (11), die in dem wasserstoffhaltigen Gas enthaltenes Kohlenmonoxid unter Verwendung von Sauerstoff selektiv oxidiert und entfernt;
eine Zufuhrvorrichtung (12) für selektive Oxidationsluft, die der selektiven Oxidationseinheit (11) selektive Oxidationsluft zuführt; und
einen Durchflussratendetektor (13) für die selektive Oxidationsluft, der eine Durchflussrate der selektiven Oxidationsluft erfasst,
wobei die Wasserstofferzeugungsmengen-Erfassungseinheit der Durchflussratendetektor (13) für die selektive Oxidationsluft (13) ist, und
die Steuerung (4) dazu konfiguriert ist, die Rohstoffzufuhrvorrichtung (2) durch Einstellen des Steuerparameters, der dem Gas mit relativ geringer Wärmemenge entspricht, in einem Fall anzusteuern, in dem eine Durchflussrate der selektiven Oxidationsluft zunimmt, und dazu konfiguriert ist, die Rohstoffzufuhrvorrichtung durch Einstellen des Steuerparameters, der dem Gas mit relativ hoher Wärmemenge entspricht, in einem Fall anzusteuern, in dem die Durchflussrate der selektiven Oxidationsluft abnimmt.

3. Brennstoffzellensystem nach Anspruch 1, wobei die Wasserstofferzeugungsvorrichtung des Weiteren umfasst:
eine selektive Oxidationseinheit (11), die in dem wasserstoffhaltigen Gas enthaltenes Kohlenmonoxid unter Verwendung von Sauerstoff selektiv oxidiert und entfernt;
eine Zufuhrvorrichtung (12) für selektive Oxidationsluft, die der selektiven Oxidationseinheit (11) selektive Oxidationsluft zuführt; und
einen Durchflussratendetektor (13) für die selektive Oxidationsluft, der eine Durchflussrate der selektiven Oxidationsluft erfasst,
wobei die Steuerung (4) die Zufuhrvorrichtung (12) für selektive Oxidationsluft so steuert, dass die Durchflussrate der selektiven Oxidationsluft eine vorgegebene Durchflussrate wird, dazu konfiguriert ist, die Rohstoffzufuhrvorrichtung (2) durch Einstellen des Steuerparameters, der dem Gas mit relativ niedriger Wärmemenge entspricht, in einem Fall anzusteuern, in dem eine Ausgabe der Zufuhrvorrichtung (12) für selektive Oxidationsluft abnimmt, und dazu konfiguriert ist, die Rohstoffzufuhrvorrichtung durch Einstellen des Steuerparameters, der dem Gas mit relativ hoher Wärmemenge entspricht, in einem Fall anzusteuern, in dem die Ausgabe der Zufuhrvorrichtung (12) für selektive Oxidationsluft zunimmt.

4. Brennstoffzellensystem nach Anspruch 1, wobei die Wasserstofferzeugungsvorrichtung des Weiteren umfasst:
einen Druckdetektor (14), der den Druck eines Weges erfasst, der die Reformiereinheit (1) stromabwärts von der Rohstoffzufuhrvorrichtung (2) einschließt,
wobei die Wasserstofferzeugungsmengen-Erfassungseinheit der Druckdetektor (14) ist,
die Steuerung (4) dazu konfiguriert ist, die Rohstoffzufuhrvorrichtung (2) durch Einstellen eines Steuerparameters anzusteuern, der dem Gas mit relativ geringer Wärmemenge entspricht, wenn der von dem Druckdetektor (14) erfasste Druck abnimmt, und dazu konfiguriert ist, die Rohstoffzufuhrvorrichtung durch Einstellen eines Steuerparameters anzusteuern, der dem Gas mit relativ hoher Wärmemenge entspricht, wenn der von dem Druckdetektor (14) erfasste Druck zunimmt.

5. Brennstoffzellensystem nach Anspruch 1, wobei die Wasserstofferzeugungsvorrichtung des Weiteren umfasst:
einen Rohstoff-Durchflussratendetektor (8), der eine Durchflussrate des Rohstoffs erfasst,
wobei die Steuerung (4) die Rohstoffzufuhrvorrichtung (2) so steuert, dass die Durchflussrate des Rohstoffs eine vorgegebene Durchflussrate wird, dazu konfiguriert ist, die Rohstoffzufuhrvorrichtung (2) durch Einstellen des Steuerparameters, der dem Gas mit relativ geringer Wärmemenge entspricht, in einem Fall anzusteuern, in dem eine Ausgabe der Rohstoffzufuhrvorrichtung (2) abnimmt, und dazu konfiguriert ist, die Rohstoffzufuhrvorrichtung (2) durch Einstellen des Steuerparameters, der dem Gas mit relativ hoher Wärmemenge entspricht, in einem Fall anzusteuern, in dem die Ausgabe der Rohstoffzufuhrvorrichtung (2) zunimmt.

6. Brennstoffzellensystem nach Anspruch 1, wobei die Steuerung (4) dazu konfiguriert ist, die Menge des erzeugten wasserstoffhaltigen Gases, die von der Wasserstofferzeugungsmengen-Erfassungseinheit erfasst wird, auf der Grundlage einer Ausgabe der Brennstoffzelle (20) zu korrigieren.

7. Brennstoffzellensystem nach einem der Ansprüche 1 bis 6,
wobei die Steuerung (4) dazu konfiguriert ist, die Wasserzufuhrvorrichtung (5) durch Einstellen des Steuerparameters, der dem Gas mit relativ geringer Wärmemenge entspricht, in einem Fall anzusteuern, in dem die Menge des erzeugten wasserstoffhaltigen Gases abnimmt, und dazu konfiguriert ist, die Wasserzufuhrvorrichtung (5) durch Einstellen des Steuerparameters, der dem Gas mit relativ hoher Wärmemenge entspricht, in einem Fall anzusteuern, in dem die Menge des erzeugten wasserstoffhaltigen Gases zunimmt.

8. Brennstoffzellensystem nach einem der Ansprüche 1 bis 7,
wobei die Steuerung (4) dazu konfiguriert ist, die Verbrennungsluftzufuhrvorrichtung (7) durch Einstellen des Steuerparameters, der dem Gas mit relativ geringer Wärmemenge entspricht, in einem Fall anzusteuern, in dem die Menge des erzeugten wasserstoffhaltigen Gases abnimmt, und dazu konfiguriert ist, die Verbrennungsluftzufuhrvorrichtung (7) durch Einstellen des Steuerparameters, der dem Gas mit relativ hoher Wärmemenge entspricht, in einem Fall anzusteuern, in dem die Menge des erzeugten wasserstoffhaltigen Gases zunimmt.

9. Verfahren zum Ansteuern einer Wasserstofferzeugungsvorrichtung mit einer Reformiereinheit (1), die einen Rohstoff reformiert, um ein wasserstoffhaltiges Gas zur Zuführung zu einer Brennstoffzelle (20) eines Brennstoffzellensystems als Brenngas zu erzeugen, einer Rohstoffzufuhrvorrichtung (2), die den Rohstoff der Reformiereinheit (1) zuführt, einer Wasserzufuhrvorrichtung (5), die der Reformiereinheit (1) Wasser zuführt, einer Brennkammer (6), die den Rohstoff oder einen Teil des Brenngases, der nicht in der Brennstoffzelle (20) verbraucht wird, verbrennt, und einer Verbrennungsluftzufuhrvorrichtung (7), die der Brennkammer (6) Verbrennungsluft zuführt, wobei die Brennstoffzelle (20) unter Verwendung des wasserstoffhaltigen Gases, das von der Wasserstofferzeugungsvorrichtung (50, 60, 70) zugeführt wird, eine Stromerzeugung durchführt, wobei das Verfahren **dadurch gekennzeichnet ist, dass** es umfasst:
wenn ein Parameter, der zu der Menge des erzeugten wasserstoffhaltigen Gases beiträgt, in einem vorgegebenen Bereich liegt, oder wenn eine Mengenänderung eines Parameters, der zu der Menge des erzeugten wasserstoffhaltigen Gases beiträgt, in einem vorgegebenen Bereich liegt, einen Schritt zum Ansteuern der Rohstoffzufuhrvorrichtung (2) durch Einstellen eines Steuerparameters, der einem Gas mit relativ geringer Wärmemenge entspricht, in einem Fall, in dem eine Menge des erzeugten wasserstoffhaltigen Gases abnimmt, oder
einen Schritt zum Ansteuern der Rohstoffzufuhrvorrichtung (2) durch Einstellen eines Steuerparameters, der einem Gas mit relativ hoher Wärmemenge entspricht, in einem Fall, in dem die Menge des erzeugten wasserstoffhaltigen Gases zunimmt,
wobei der Steuerparameter eines aus einer Menge des zugeführten Rohstoffs, einer Menge des zugeführten Wassers und einer Durchflussrate der Verbrennungsluft ist, und
wobei der Parameter mindestens eines aus einer Zusammensetzung des Rohstoffs, einer Umgebungstemperatur und einem Druck des Rohstoffs ist.

10. Verfahren nach Anspruch 9, wobei das Gas mit geringer Wärmemenge im Vergleich zu dem Gas mit hoher Wärmemenge eine große Menge eines Inertgases enthält.

## Revendications

1. Système de pile à combustible, comprenant :
un appareil de production d'hydrogène (50, 60, 70) ; et
une pile à combustible (20),
l'appareil de production d'hydrogène (50, 60, 70) comprenant :
une unité de reformage (1) qui reforme une matière première afin de produire un gaz contenant de l'hydrogène destiné à être fourni à la pile à combustible (20) en tant que gaz combustible ;
un dispositif de fourniture de matière première (2) qui fournit de la matière première à l'unité de reformage (1) ;
un dispositif de fourniture d'eau (5) qui fournit de l'eau à l'unité de reformage (1) ; et
une chambre de combustion (6) qui brûle la matière première ou une partie du gaz combustible qui n'est pas consommée au niveau de la pile à combustible (20) ;
un dispositif de fourniture d'air de combustion (7) qui fournit de l'air de combustion à la chambre de combustion (6) ; et
une unité de détection de quantité de production d'hydrogène (3a, 13, 14, 8) qui détecte une quantité du gaz contenant de l'hydrogène produit ; et
un module de commande (4) ; et
dans lequel la pile à combustible (20) produit de l'électricité en utilisant le gaz contenant de l'hydrogène qui est fourni par l'appareil de production d'hydrogène (50, 60, 70),
**caractérisé en ce que**
lorsque un paramètre qui contribue à la quantité du gaz contenant de l'hydrogène produit se trouve dans une plage prédéterminée, ou lorsque une quantité de variation d'un paramètre qui contribue à la quantité du gaz contenant de l'hydrogène produit est dans une plage prédéterminée, le module de commande (4) est configuré pour actionner le dispositif de fourniture de matière première (2) en définissant un paramètre de commande correspondant à un gaz à quantité de chaleur relativement faible dans un cas où la quantité du gaz contenant de l'hydrogène produit diminue, et est configuré pour actionner le dispositif de fourniture de matière première (2) en définissant un paramètre de commande correspondant à un gaz à quantité de chaleur relativement élevée dans un cas où la quantité du gaz contenant de l'hydrogène produit augmente,
dans lequel le paramètre de commande est l'un quelconque parmi une quantité de matière première fournie, une quantité d'eau fournie et un débit d'air de combustion, et
dans lequel le paramètre est l'un au moins parmi une composition de la matière première, une température de l'environnement ambiant et une pression de la matière première.

2. Système de pile à combustible selon la revendication 1, dans lequel l'appareil de production d'hydrogène comprend, en outre :
une unité d'oxydation sélective (11) qui oxyde sélectivement et élimine du monoxyde de carbone présent dans le gaz contenant de l'hydrogène en utilisant de l'oxygène ;
un dispositif de fourniture d'air pour oxydation sélective (12) qui fournit de l'air pour oxydation sélective à l'unité d'oxydation sélective (11) ; et
un détecteur de débit d'air pour oxydation sélective (13) qui détecte un débit de l'air pour oxydation sélective,
dans lequel l'unité de détection de quantité de production d'hydrogène est le détecteur de débit d'air pour oxydation sélective (13), et
le module de commande (4) est configuré pour actionner le dispositif de fourniture de matière première (2) en définissant le paramètre de commande correspondant au gaz à quantité de chaleur relativement faible dans un cas où un débit de l'air pour oxydation sélective augmente, et est configuré pour actionner le dispositif de fourniture de matière première en définissant le paramètre de commande correspondant au gaz à quantité de chaleur relativement élevée dans un cas où un débit de l'air pour oxydation sélective diminue.

3. Système de pile à combustible selon la revendication 1, dans lequel l'appareil de production d'hydrogène comprend, en outre :
une unité d'oxydation sélective (11) qui oxyde sélectivement et élimine du monoxyde de carbone présent dans le gaz contenant de l'hydrogène en utilisant de l'oxygène ;
un dispositif de fourniture d'air pour oxydation sélective (12) qui fournit de l'air pour oxydation sélective à l'unité d'oxydation sélective (11) ; et
un détecteur de débit d'air pour oxydation sélective (13) qui détecte un débit de l'air pour oxydation sélective,
dans lequel le module de commande (4) commande le dispositif de fourniture d'air pour oxydation sélective (12) de sorte que le débit de l'air pour oxydation sélective devienne un débit prédéfini, est configuré pour actionner le dispositif de fourniture de matière première (2) en définissant le paramètre de commande correspondant au gaz à quantité de chaleur relativement faible dans un cas où une capacité du dispositif de fourniture d'air pour oxydation sélective diminue, et est configuré pour actionner le dispositif de fourniture de matière première en définissant le paramètre de commande correspondant au gaz à quantité de chaleur relativement élevée dans un cas où la capacité du dispositif de fourniture d'air pour oxydation sélective augmente.

4. Système de pile à combustible selon la revendication 1, dans lequel l'appareil de production d'hydrogène comprend, en outre :
un détecteur de pression (14) qui détecte une pression d'un chemin comportant l'unité de reformage (1) en aval du dispositif de fourniture de matière première (2),
dans lequel l'unité de détection de quantité de production d'hydrogène est le détecteur de pression (14),
le module de commande (4) est configuré pour actionner le dispositif de fourniture de matière première (2) en définissant un paramètre de commande correspondant au gaz à quantité de chaleur relativement faible dans un cas où la pression détectée par le détecteur de pression (14) diminue, et est configuré pour actionner le dispositif de fourniture de matière première en définissant un paramètre de commande correspondant au gaz à quantité de chaleur relativement élevée dans un cas où la pression détectée par le détecteur de pression (14) augmente.

5. Système de pile à combustible selon la revendication 1, dans lequel l'appareil de production d'hydrogène comprend, en outre :
un détecteur de débit de matière première (8) qui détecte un débit de la matière première,
dans lequel le module de commande (4) commande le dispositif de fourniture de matière première (2) de sorte que le débit de la matière première devienne un débit prédéfini, est configuré pour actionner le dispositif de fourniture de matière première (2) en définissant le paramètre de commande correspondant au gaz à quantité de chaleur relativement faible dans un cas où une capacité du dispositif de fourniture de matière première (2) diminue, et est configuré pour actionner le dispositif de fourniture de matière première (2) en définissant le paramètre de commande correspondant au gaz à quantité de chaleur relativement élevée dans un cas où la capacité du dispositif de fourniture de matière première (2) augmente.

6. Système de pile à combustible selon la revendication 1, dans lequel le module de commande (4) est configuré pour corriger la quantité du gaz contenant de l'hydrogène produit, laquelle est détectée par l'unité de détection de production d'hydrogène, sur la base d'une puissance de sortie de la pile à combustible (20).

7. Système de pile à combustible selon l'une quelconque des revendications 1 à 6,
dans lequel le module de commande (4) est configuré pour actionner le dispositif de fourniture d'eau (5) en définissant le paramètre de commande correspondant au gaz à quantité de chaleur relativement faible dans un cas où la quantité du gaz contenant de l'hydrogène produit diminue, et est configuré pour actionner le dispositif de fourniture d'eau (5) en définissant le paramètre de commande correspondant au gaz à quantité de chaleur relativement élevée dans un cas où la quantité de gaz contenant de l'hydrogène produit augmente.

8. Système de pile à combustible selon l'une quelconque des revendications 1 à 7,
dans lequel le module de commande (4) est configuré pour actionner le dispositif de fourniture d'air de combustion (7) en définissant le paramètre de commande correspondant au gaz à quantité de chaleur relativement faible dans un cas où la quantité du gaz contenant de l'hydrogène produit diminue, et est configuré pour actionner le dispositif de fourniture d'air de combustion (7) en définissant le paramètre de commande correspondant au gaz à quantité de chaleur relativement élevée dans un cas où la quantité de gaz contenant de l'hydrogène produit augmente.

9. Procédé d'actionnement d'un appareil de production d'hydrogène comportant une unité de reformage (1) qui reforme une matière première afin de produire un gaz contenant de l'hydrogène destiné à être fourni à une pile à combustible (20) d'un système de pile à combustible en tant que gaz combustible, un dispositif de fourniture de matière première (2) qui fournit de la matière première à l'unité de reformage (1), un dispositif de fourniture d'eau (5) qui fournit de l'eau à l'unité de reformage (1), une chambre de combustion (6) qui brûle la matière première ou une partie du gaz combustible qui n'est pas consommée au niveau de la pile à combustible (20), et un dispositif de fourniture d'air de combustion (7) qui fournit de l'air de combustion à la chambre de combustion (6), dans lequel la pile à combustible (20) produit de l'électricité en utilisant le gaz contenant de l'hydrogène qui est fourni par l'appareil de production d'hydrogène (50, 60, 70), le procédé étant **caractérisé en ce qu'**il comprend :
lorsque un paramètre qui contribue à la quantité du gaz contenant de l'hydrogène produit se trouve dans une plage prédéterminée, ou lorsque une quantité de variation d'un paramètre qui contribue à la quantité du gaz contenant de l'hydrogène produit est dans une plage prédéterminée, une étape consistant à actionner le dispositif de fourniture de matière première (2) en définissant un paramètre de commande correspondant à un gaz à quantité de chaleur relativement faible dans un cas où une quantité du gaz contenant de l'hydrogène produit diminue, ou une étape consistant à actionner le dispositif de fourniture de matière première (2) en définissant un paramètre de commande correspondant à un gaz à quantité de chaleur relativement élevée dans un cas où la quantité du gaz contenant de l'hydrogène produit augmente,
dans lequel le paramètre de commande est l'un quelconque parmi une quantité de matière première fournie, une quantité d'eau fournie et un débit de l'air de combustion, et
dans lequel le paramètre est l'un au moins parmi une composition de la matière première, une température de l'environnement ambiant et une pression de la matière première.

10. Procédé selon la revendication 9, dans lequel le gaz à faible quantité de chaleur contient une quantité élevée d'un gaz inerte par rapport au gaz à quantité de chaleur élevée.
